(19) **Europäisches Patentamt / European Patent Office / Office européen des brevets**

(11) **EP 2 870 492 B1**

(12) **EUROPEAN PATENT SPECIFICATION**

(45) Date of publication and mention
of the grant of the patent:
**21.06.2017 Bulletin 2017/25**

(51) Int Cl.:
**F41G 7/22** *(2006.01)*     **G01S 3/784** *(2006.01)*
**G01S 7/486** *(2006.01)*

(21) Application number: **13812666.9**

(22) Date of filing: **04.07.2013**

(86) International application number:
**PCT/IL2013/050571**

(87) International publication number:
**WO 2014/006623 (09.01.2014 Gazette 2014/02)**

(54) **LOW-ENERGY LASER SEEKER**

ENERGIEARMER LASERSUCHER

CHERCHEUR LASER À FAIBLE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.07.2012 IL 22075812**

(43) Date of publication of application:
**13.05.2015 Bulletin 2015/20**

(73) Proprietor: **Israel Aerospace Industries Ltd.
70100 Lod (IL)**

(72) Inventors:
• **KARAZI, Uri
99785 Nof A alon (IL)**

• **LEVY, Benjamin
5600 Yahud (IL)**
• **HEYMANN, Valery
56356 Yehud (IL)**

(74) Representative: **Grünecker Patent- und
Rechtsanwälte
PartG mbB
Leopoldstraße 4
80802 München (DE)**

(56) References cited:
**WO-A1-2012/080492     WO-A2-2005/050240
US-A1- 2009 323 047     US-A1- 2010 128 566
US-B2- 8 107 057**

## Description

### FIELD OF THE INVENTION

This invention relates to the field of guiding a platform to a target with the help of a laser signal.

### BACKGROUND OF THE INVENTION

Designating targets using laser spots is a widely known technique due to the high precision of the pointing laser device and the relatively low cost of the homing head (or seeker). For example the seeker can be mounted on an intercepting platform, such as a missile, and utilize the energy reflected from an illuminated target, for generating steering commands and homing the intercepting platform towards a target (such as a moving vehicle).

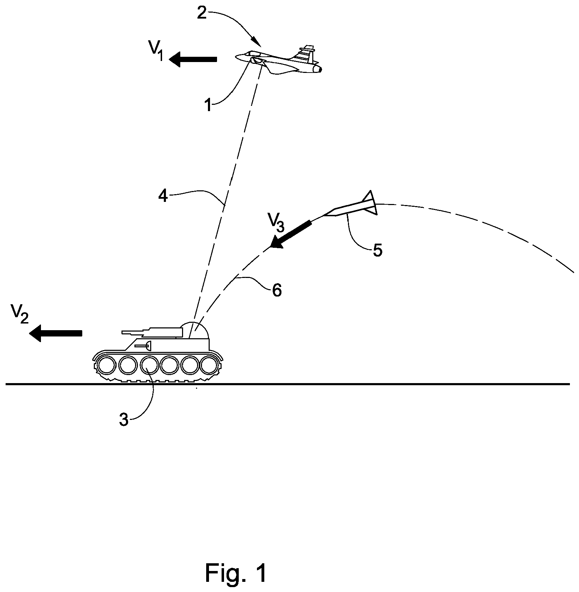

As illustrated schematically in **Fig. 1,** according to known laser spot guiding techniques, a laser designator **1** constantly tracks the target **3** and illuminates it with a pulsed spot laser beam **4. Fig. 1** also illustrates an intercepting platform **5** (in this case a missile) employing a seeker with a laser sensor. The sensor's surface is often divided into four equal sectors (not shown in **Fig. 1**) and associated with a spectral filter which transfers energy reflected from the illuminated target as well as a certain portion of noise (that stems, e.g. from sunlight). The energy received in each of the sectors of the sensor is converted into corresponding signal intensity. The differences between the signal intensities in the respective sectors are used to calculate the direction to the target (line of sight- LOS **6**) and/or the change of direction LOS rate. The calculated LOS and/or LOS rate serve for steering the missile for homing onto the target **3.**

Published references considered to be relevant as background to the presently disclosed subject matter are listed below. Acknowledgement of the references herein is not to be inferred as meaning that these are in any way relevant to the patentability of the presently disclosed subject matter.

US Patent No. 6043867 discloses an interceptor fitted with a target tracker unit that includes a passive infrared tracker capable of sensing infrared radiation (IR) emitted from a flying target and being responsive to the sensed IR radiation, for generating a succession of Line of Sight (LOS) and/or LOS rates signals that are stored in a database. Self state means capable of providing a succession of interceptor's self state data. An electromagnetic range finder includes a transmitter assembly for transmitting pulsed radiations and receiver assembly for receiving reflections that surpasses adjustable detection threshold. The electro-magnetic finder is configured to operate at first detection threshold for receiving reflections of relatively low magnitude, and storing the reflections in the database. A target reflection detection module communicating with the database, for detecting target reflections from among those stored in the reflection database. An estimator includes a range-based target estimator for calculating target state estimations on the basis of detected target reflections, the LOS measurements and self stage data, thereby facilitating early steering of the interceptor for duly homing said interceptor onto the target.

US Patent No. 8054451 discloses a system that includes a laser designator configured to continuously designate a target with a pulsed laser spot. The system includes a sensor and associated processing system configured to receive a reflection of the laser spot, convert the received energy to a plurality of signals, processing the signals for detecting true reflected signals and processing the true reflected signals for generating target related action. The sensor and associated processor are configured to detect the true signals notwithstanding an inherent low Signal/Noise ratio of below **4** of the received signals from due to low pulse power of the laser designator and distance to target.

### GENERAL DESCRIPTION

According to one aspect of the presently disclosed subject matter there is provided a method of detecting a signal reflected from a target designated by a pulse laser spot according to claim 1. According to certain embodiments the method further comprising: prior to performing the summation, inserting the assigned value to a respective cell $i$ in a row of a matrix comprising K rows, each row comprising the values of a respective PRI; and performing the summation as a summation of a respective cell $i$ in K rows thereby generating a summation vector.

According to certain embodiments wherein the signal is received by a 4 quarters laser sensor, each quarter associated with a respective processing channel, wherein the sampling and assigning is performed for each of the 4 quarters, the method further comprising: performing a logical OR on each respective ($i^{th}$) value in each of the 4 processing channels, thereby obtaining a consolidated value from all 4 processing channels and performing the summation with the consolidated value.

According to certain embodiment wherein the signal is received by a 4 quarters laser sensor, each quarter associated with a respective processing channel, wherein the sampling and assigning is performed for each of the 4 quarters, the method further comprising: summing values of respective samples received in at least each pair of adjacent quarters, thereby generating 4 intermediate processing channels; performing the assigning on the 4 intermediate processing channels; and performing a logical OR operation on each respective ($i^{th}$) value in each of the 4 processing channels and the 4 intermediate processing channels, thereby obtaining a consolidated value from all 8 processing channels.

According to certain embodiments the method further comprising: adding a plurality of samples on each side of the area thereby generating a tracking window;

and identifying a final true sample within the tracking window, the final true sample representing energy of the laser spot reflected from the target.

According to another aspect of the presently disclosed subject matter there is provided a laser seeker operable for detecting a signal reflected from a target designated by a pulse laser according to claim 10. According to certain embodiments the processing unit in the laser seeker is further operable, prior to performing the summation, to insert the assigned value to a respective cell *i* in a row of a matrix comprising K rows, each row comprising the values of a respective PRI; and perform the summation as a summation of a respective cell *i* in K rows thereby generating a summation vector.

According to certain embodiments wherein the sensor is a 4 quarters laser sensor, each quarter associated with a respective processing channel, each processing channel comprising a sampler operable to sample a signal received by a respective quarter, the assigning is performed for each of the 4 processing channels, the processing unit is further operable to perform a logical OR on each respective ($i^{th}$) value in each of the 4 processing channels, thereby obtaining a consolidated value from all 4 processing channels and sum the consolidated values.

According to certain embodiments K is between 2 to 20.

According to certain embodiment the pulse laser spot is characterized by a rate of between 10 to 25 pulses per second and a power between 10 to 45 millijoules.

According to certain embodiments the sampling is configured to operate at a sampling rate between 50 to 200 Mega Hertz.

According to certain embodiments a clock associated with a laser designator, designating the pulse laser spot is not synchronized with the accurate clock in the seeker.

According to certain embodiments the laser seeker integrated in a laser system, the laser system further comprising a laser designator operable for designating the pulsed laser spot.

According to another aspect of the present invention there is provided a program storage device according to claim 20.

## BRIEF DESCRIPTION OF THE DRAWINGS

In order to understand the invention and to see how it may be carried out in practice, embodiments will now be described, by way of non-limiting example only, with reference to the accompanying drawings, in which:

Fig. 1 is a schematic illustration showing a typical scenario of intercepting a vehicle using laser pointing technique;
Fig. 2 is a functional block diagram schematically illustrating a laser seeker unit, in accordance with the presently discloses subject matter;
Fig. 3 is flowchart showing operations which are carried out during target detection process, in accordance with the presently disclosed subject matter;
Fig. 4 is a functional block diagram schematically illustrating a sensor and associated processing unit, in accordance with the presently disclosed subject matter;
Fig. 5 is flowchart showing operations which are carried out during target detection process, in accordance with the presently disclosed subject matter;
Fig. 6a shows an example, in small scale, of a binary matrix, in accordance with the presently disclosed subject matter;
Fig. 6b shows a summation vector, in accordance with the presently disclosed subject matter;
Fig. 6c shows non-limiting examples of possible filters which can be used in accordance with the presently disclosed subject matter;
Fig. 7 is a flowchart illustrating an example of operations carried out during a filtering process, in accordance with the presently disclosed subject matter;
Fig. 8 is a flowchart showing operations which are carried out during a target tracking process, in accordance with the presently disclosed subject matter; and
Fig. 9 is a flowchart illustrating the operation performed in a guard process, in accordance with the presently disclosed subject matter.

## DETAILED DESCRIPTION OF EMBODIMENTS

In the drawings and descriptions set forth, identical reference numerals indicate those components that are common to different embodiments or configurations. Unless specifically stated otherwise, as apparent from the following discussions, it is appreciated that throughout the specification discussions utilizing terms such as "receiving", "performing", "identifying", "selecting", "locating", "inserting", "adding", "summing" or the like, include action and/or processes of a computer that manipulate and/or transform data into other data, said data represented as physical quantities, e.g. such as electronic quantities, and/or said data representing the physical objects.

It is appreciated that certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable subcombination.

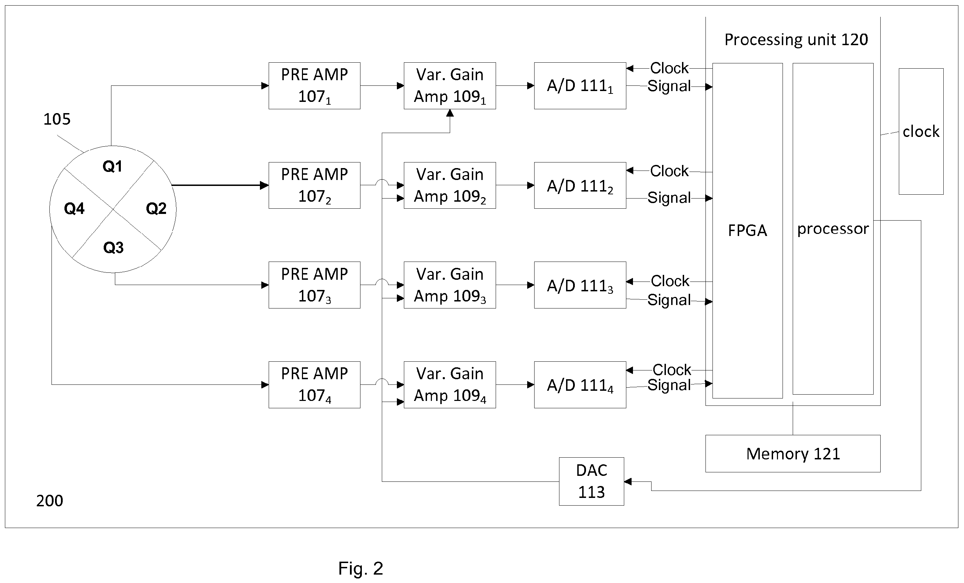

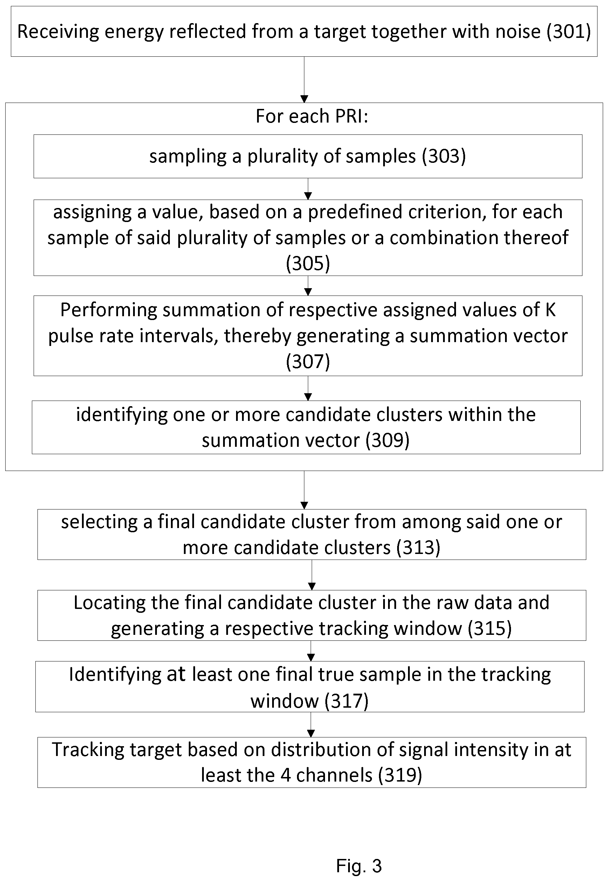

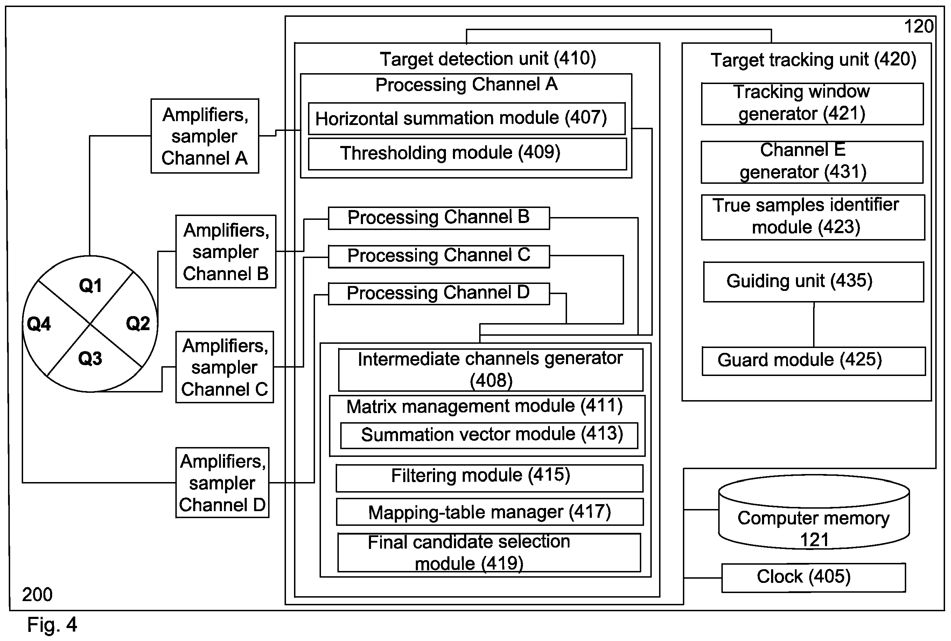

In embodiments of the presently disclosed subject matter, fewer, more and/or different stages than those shown in **Figs. 3, 5, 7, 8** and **9** may be executed. In embodiments of the presently disclosed subject matter one or more stages illustrated in **Figs. 3, 5, 7, 8** and **9** may be executed in a different order and/or one or more groups of stages may be executed simultaneously. **Figs. 2** and **4** illustrate schematics of the system architecture in accordance with an embodiment of the presently disclosed subject matter. The elements in **Figs. 2** and **4** may be centralized in one location or dispersed over more than one location. In different examples of the presently disclosed subject matter, the system may comprise fewer, more, and/or different elements than those shown in **Figs. 2** and **4.** The invention is not bound by the specific architecture depicted in **Figs. 2** and **4;** equivalent and/or modified functionality may be consolidated or divided in another manner and may be implemented in any appropriate combination of software, firmware and hardware.

As described below the laser seeker disclosed herein comprises or is otherwise associated with at least one processor operable for executing related operations as described herein. The term "processor" should be expansively construed to cover any kind of electronic device with data processing capabilities, including, by way of non-limiting example, a computing system, a digital signal processor (DSP), a microcontroller, a field programmable gate array (FPGA), an application specific integrated circuit (ASIC), etc.) or any other appropriate electronic computing device, and or any combination thereof.

Further, it should be noted that the term "criterion" as used herein should be expansively construed to include any compound criterion, including, for example, several criteria and/or their logical combinations.

Bearing the above in mind, the description now returns to **Fig. 1.** In accordance with one (yet not exclusive) scenario, laser designator **1** transmits pulses at a rate of 10-20 Hz, facilitating sampling of energy reflected from a designated target for homing purposes. The wavelength that is used can be for example 1064 nanometers. Each pulse is narrow (15-20 nanoseconds) and has generally energy of 80 to 120 millijoules. Energy between 80 to 120 millijoules is used in order to secure sufficient signal to noise ratio that will be received in the sensor and will allow discerning between true signals, reflected from the target, and ambient noise (such as sunlight) at a sufficient level of certainty. The energy received by the sensor is converted to electrical current/voltage, depending also on the sensor's sensitivity. This output power of the laser allows the intercepting missile to process the so discerned signal at sufficient range from the target, providing a signal to noise ratio (typically between 6 to 10), which is sufficient for example, for generating steering commands for the intercepting missile in order to achieve an accurate homing onto the target **3.**

Techniques directed for processing the reflected energy of a laser beam for homing a platform towards its target suffer from a number of disadvantages. For example, those existing techniques which depend on a high energy laser beam require laser designators generating a reflected beam with energy around 80 to 120 millijoules, which are characterized by a relatively high price tag. In addition, such laser designators are also characterized by a relatively large physical dimensions as well as relatively high weight which hinder the possibility to carry portable laser designators by a person such as an infantry individual, or fitting them in a vehicle (for instance Unmanned Ground/Arial Vehicle).

A possible solution to the above deficiencies is to use low-energy laser designators which are characterized by lower-weight and smaller dimensions as well as lower costs. Among laser designators which are available today, are low-energy laser designators operating with energy of around 10 to 45 millijoules. Such laser designators can also provide a pulse rate of 10 to 25 Hz (also referred to as "pulse per second" (PPS)), at a time of 15 to 20 nanoseconds, similar to the high-energy designator described above. Such laser designators can be carried by a platform that is limited by its capacity to carry heavy payload, for example an infantry soldier or a low weight flying platform (e.g. UAV).

However, due to the low power of the laser beam, and further due to the fact that in typical laser guiding scenarios, at the initial intercepting phase the intercepting platform is relatively far away from the designated target, the energy which is reflected from the designated target and received by the sensor is inherently of low intensity. As the signal to noise ratio is naturally low, this may create numerous false alarms, each seemingly indicating the existence of a signal value, whereas in reality it is a noise having energy level which is very close to that of the low signal value. The reflected energy may, therefore, be insufficient for enabling known in the art seekers to properly discern between signal and noise in order to calculate the angular error and angular error rate, and thus cannot be used for accurately homing a platform to its designated target.

US Patent No. 8054451 discloses a technique for processing reflected energy which is directed for working with a low power laser beam. However, this technique relies on laser designators working at high pulse frequency, at the order of 5000 Hz, and is therefore not suitable to operate with laser designator with a lower pulse frequency such as for example 10 to 25 Hz.

Accordingly, the presently disclosed subject matter includes, *inter alia*, a laser seeker which is operable to receive reflected energy of a laser beam generated by a low-power laser designator, to generate electric signals from the received energy and utilize the electrical signals for guiding a platform to its designated target. The presently disclosed subject matter offers a solution which enables to discern between true laser signals (i.e. reflected from a target) and noise, even when the signal to noise ratio is low (e.g. lower than 3). Accordingly, among one of its advantages, the presently disclosed subject matter enables to use a low power laser designator operating at around 10 to 25 millijoules and achieve similar performance at similar ranges and conditions of an 80 to 120 millijoules laser designator.

Turning to **Fig. 2,** this shows a functional block diagram schematically illustrating a laser seeker unit, in accordance with the presently disclosed subject matter. Laser seeker **200** comprises a sensor head **105** that is divided into four sectors (quarters), denoted by **Q1, Q2, Q3** and **Q4,** each sector being associated with an individual processing channel. Sensor head **105** is configured to receive incoming reflection of light, including reflected laser signal and noise. The received energy, in each channel, is transmitted first to a respective pre-amplifier **107**$_{(1-4)}$ and then to a respective variable gain amplifier **109**$_{(1-4)}$. Pre-amplifier **107**$_{(1-4)}$ and variable gain amplifier **109**$_{(1-4)}$ are operable to amplify or attenuate the intensity of the received signals in order to maintain the intensity of the signal within a required range. Processor **120** is connected via DAC **113** to each variable gain amplifier **109**$_{(1-4)}$, in a feedback loop, in order to facilitate automatic gain control (ACG) of the received signal. The analog incoming signals in each of the 4 channels are transmitted to a respective A/D sampler **111**$_{(1-4)}$, which is associated with a clock and configured to sample the signals at a predefined rate (e.g. 10 bit A/D sampler). The digital signal samples are then forwarded to processing unit **120** which is configured, inter alia, to run a target detection process and a target tracking process as explained below in more detail. Processing unit **120** can include for example field-programmable gate array (FPGA) components, a clock generator and can be associated with computer memory **121.**

Fig. 3 is a general flowchart illustrating operations which are carried out during target detection and tracking processes, in accordance with the presently disclosed subject matter. At block **301,** energy reflected from a target along with ambient noise is received at sensor head **105**. Each of the four quarters of the sensor head receives a certain amount of energy.

At block **303,** for each pulse repetition intervals (PRI) of the incoming signal in each quarter, a plurality of samples are sampled by a sampler **111** of a respective processing channel. The PRI is the time interval elapsing from one pulse to the next. The sampled values are forwarded to processing unit **120,** where the true signal detection process and target tracking process is executed.

As described in more detail below, each sample (or a combination thereof) is assigned with a value, based on a predefined criterion related to the intensity of the sample (block **305**). For example, two values can be used where each sample (or a combination thereof) is assigned with a first value or a second value, based on a predefined criterion related to the intensity of the sample. A value is assigned to each $i^{th}$ sample (or a combination of samples) in a PRI received by each of the 4 quarters, thereby obtaining at least 4 assigned values for each pulse.

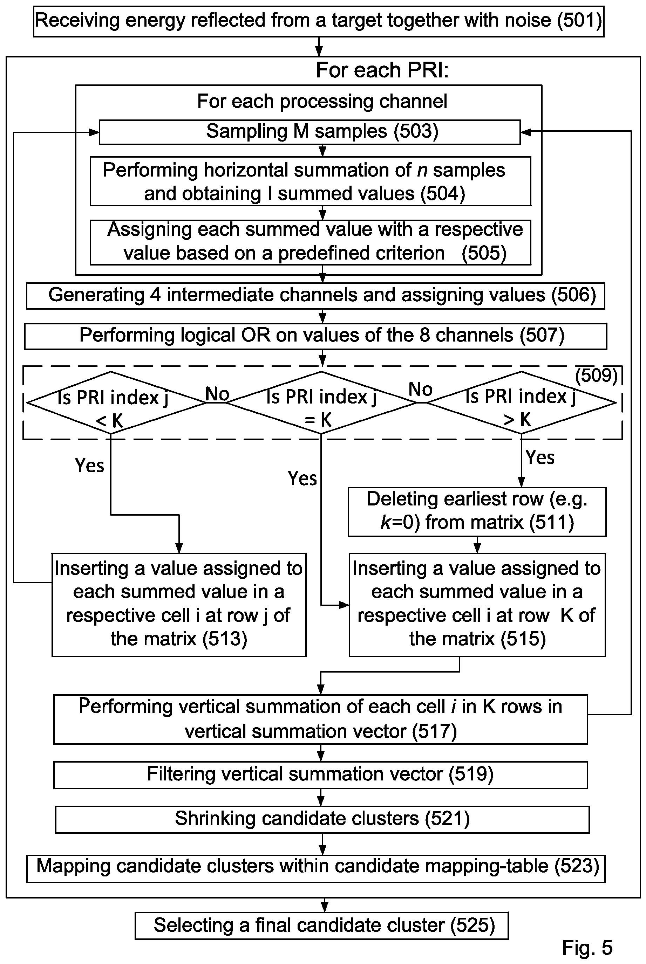

By way of example only and as explained in more detail below with reference to **Fig. 5,** a matrix can be facilitated for the purpose of performing the detection process disclosed herein. For example, each of the values assigned to each sample (or combination of one or more samples) in a given PRI, can be inserted to a respective cell i in a row of a matrix. A logical OR operation can be performed on the values assigned to the samples received at each one of the 4 quarters. In case there is at least one value which is indicative of an intensity of a sample (or combination of one or more samples) above the threshold, this value is inserted in the respective cell in the matrix. This way a pulse which is received in (at least) 4 channels is consolidated in a single cell of the matrix.

The matrix can comprise K rows, each row comprising the values assigned to respective samples (or combination of samples) of one PRI. It should be noted however, that the use of a matrix for this purpose, as well as the matrix type and its specific characteristics, are described merely as an example and should not be construed as limiting. For example, instead of a matrix, each value which is assigned to a respective sample (or combination thereof) can be identified by a corresponding index number or time stamp.

At block **307** the respective ($i^{th}$) assigned values in K pulse repetition intervals are summed, thereby generating a summation vector. For example, in case a matrix is facilitated for storing the assigned values in its respective matrix cells, summation of a respective cell i in K rows can be performed, thereby generating a summation vector.

As explained in more detail below, for each summation vector a filtering process is carried out in order to identify one or more candidate clusters within the summation vector (bock **309**). Candidate clusters represent areas within the summation vector which are potentially indicative of samples within a PRI that represent true signal portions reflected from the target.

Once the samples of a predefined (K) number of PRIs have been processed and respective one or more candidate clusters have been identified, a final candidate cluster is selected from among the candidate clusters (block **313**). The final candidate cluster is expected to represent a range of indexes within the summation vector that includes true signal portions of a laser signal reflected from an illuminated target.

The final candidate cluster is located (e.g. aligned) within an incoming PRI in order to locate a region within the PRI which comprises true signal portions (samples) and generate a respective tracking window (block **315**). The tracking window defines a restricted area within the signal in which reflection of true laser signal is expected to be found and enables to focus the detection process to this area.

At block **317** at least on final true sample is identified within the tracking window. The final true samples are a group of consecutive samples of the laser signal which were generated by energy reflected from the illuminated target. From among the final true samples a final true sample is identified.

Once the location of at least one final true sample within the PRI is identified, the intercepting platform can be guided towards the target based on distribution of signal intensity in at least the 4 channels (block **319**). A more detailed description of operations performed during the detection and tracking process is described below.

**Fig. 4** is a functional block diagram schematically illustrating a sensor and associated processing unit, in accordance with the presently disclosed subject matter. For better clarity, in the following description, the operations in **Figs. 5, 7, 8** and **9** are described with reference to the elements illustrated in **Fig. 4.** However, it should be understood that the specific functional elements which are illustrated in **Fig. 4** are merely non-limiting examples and more, less or different elements can be used instead or in addition to these elements. Furthermore, it should be appreciated to those versed in the art that some of the specific technical characteristics of the laser designator and seeker which are described herein represent merely non-limiting examples and variations of these characteristics reside within the scope of the teaching disclosed herein.

As mentioned above, a seeker **200** is fitted on an intercepting platform (e.g. missile **5**) and includes a sensor head **105** that is divided into four sectors (quarters), designated **Q1** to **Q4,** respectively. Each sector is associated with a distinct processing channel constituting a part of a processing system. For simplicity, only processing channel **A** associated with sector **Q1** is elaborated. The other sectors **Q2** to **Q4,** are associated with processing channels **B** to **D,** which are substantially identical processing channels to channel **A.** All 4 processing channels operate substantially at the same time.

Seeker **200** further comprises processing unit **120** which is associated with one or more processers and a computer memory **121.** Processing unit **120** can comprise a target detection unit **410** operable to process incoming signal samples and identify samples representing true signal portions of laser energy reflected from a target. Processing unit **120** can further comprise a target tracking unit **420** operable to track a target which has been detected by target detection unit **410** and facilitate guidance of the intercepting platform towards the target. A more detailed description of the operation of the different components of processing unit **120** is provided below.

In general, after having determined the location of true signal portions within the PRI, the intensity of the signal in the so determined location in at least each of the four channels is compared in order to calculate the error between the true LOS to the target and the direction of the seeker, and derive therefrom LOS direction and/or LOS direction rates to the target, which facilitate appropriate guidance of the intercepting platform to the target. LOS direction and/or LOS direction rates are examples of LOS related data.

Note, that unlike other types of sensors, which in order to compensate for a low signal to noise ratio are divided into small compartments (i.e. sensors matrix) each with a limited reception angle, each of the four quarters in a four quarters sensor provides a wide angle of detection and accordingly the wide angle of detection is more susceptible to receiving noise in addition to true signals.

Turning to **Fig. 5,** it shows a flowchart of operations which are carried out during the target detection process, in accordance with the presently disclosed subject matter. **Fig. 5** illustrates an example in which binary values are assigned and inserted horizontally into rows of a binary matrix. As asserted above, this is merely a non-limiting example and other variations of this approach reside within the scope of the presently disclosed subject matter. Such variations include for example, other data structures which can be used instead of a matrix. In addition, other non-binary values can be used instead of binary values, and also the assigned values can be inserted vertically, instead of horizontally, into a corresponding table.

At block **501** The energy reflected from the target (in response to the illuminating spot of the designator pulse) is received by the sensor together with energy which originated from ambient noise (such as sunlight) and is converted to a signal that is fed to sampler **111** controlled by clock **405.** It should be noted that according to the presently disclosed subject matter, clock **405** is not necessarily synchronized with the clock of the laser designator, and therefore the laser designator and the seeker can operate independently of each other.

At block **503** the reflected signals received by each of the four quarters (Q1 to Q4) of the sensor head **105** are sampled by a respective sampler **111,** operable to sample $M$ samples for each pulse rate interval (PRI), where the $M$ samples can be indexed sequentially. Assuming for example, that the pulse rate of the laser designator is 20 PPS with a respective PRI of 50 milliseconds and sampler **111** is operating at a sampling rate of 100 MHz, sampler **111,** samples 5 million samples ($M$ = 5 Mega) per each PRI, each sample extending over around 10 nanoseconds. A pulse width of about **10-25** nanoseconds which is generated by the laser designator can be expanded (by pre-amplifier **107** and variable gain amplifier **109**) to around **80** nanoseconds, and therefore each true signal (reflected laser pulse) extends over about **80** nanoseconds which correspond to around 8 samples. As mentioned above, in accordance with the presently disclosed subject matter, the clock that controls the operation of sampler **111** is not necessarily synchronized with the clock that controls the pulse generation in the laser designator and therefore it is not known in advance where in the 50 milliseconds of each PRI, the true signal portions (samples of the energy generated by the narrow designating pulse and reflected from the target), will fall (or in other words, where in the 5 million samples of each PRI the relevant **8** samples fall). Thus, in light of a possible low signal to noise ratio, the narrow width of the pulse and uncertainty with regard to the location of the true signal location within a respective PRI, the task of identifying true signal portions within each PRI poses a substantial challenge.

Optionally, in order to reduce the number of samples and increase the intensity of the energy in each sample, consecutive samples can be summed. Accordingly, at block **504,** for each *M* samples of each PRI, horizontal summations of groups of *n* consecutive samples are performed thereby obtaining *I* summed values, each value corresponding to a summation of *n* samples. For example, the 5 million samples mentioned above, can be reduced to **1** million summed values by horizontal summation of each 5 consecutive samples into a summed value. Alternatively, the **5** million samples can be reduced to **1** million summed values by horizontal summation of each 10 consecutive samples, wherein the 5 last samples in one summation, overlap with the 5 first samples of the next summation. Horizontal summation module **407,** of each processing channel A to D can be operable to perform horizontal summation of samples received by the respective quarter as described with reference to block **504.**

At block **505** each of the *I* summed values is associated with a respective value based on a predefined criterion. For example, the criterion can be a predefined threshold value. Each of the summed values is compared to the threshold value and in case the intensity of the energy represented by the summed value exceeds the threshold value, the summed value is associated with a value indicating that the summed value represents true signal candidates. True signal candidates potentially represent a true signal-portion (comprising one or more samples) of actual laser energy reflected from the target. Otherwise the summed value is associated with another value indicating that the summed value represents noise. For example, true signal candidates can be assigned with a value of 1 and noise can be assigned with a value of 0.

The threshold value can be calculated according to any method which is known in the art, for example by calculating an average value of all 1 million summed values in a single PRI and multiplying the resulting average by a constant number. The threshold value can be calculated in order to obtain a desired constant false alarm rate (CFAR). According to one example the threshold is calculated in order to obtain around 4000 indications of summed values above threshold, per each PRI. Thresholding module **409** in each processing channel A to D can be operable to perform the operations described with reference to block **505.** Thresholding module **409** can be configured to continuously update a dynamic threshold, based on a current number of detections, in order to maintain a desired CFAR.

In some cases, the laser spot reflected from the target falls between two quarters, such that part of the laser spot is located in one quarter and part of the laser spot is located in an adjacent quarter. In such cases, the intensity of the signal in each individual quarter may not exceed the threshold and accordingly no signal is detected, although the laser spot falls on the sensor head.

Optionally, in order to facilitate the detection of reflected laser energy, which falls between two adjacent quarters of seeker head **105**, 4 additional intermediate channels can be generated by summing the samples received in each pair of adjacent quarters (block **506**). Intermediate channel A-B is generated by summing the respective samples in channel A and channel B; Intermediate channel B-C is generated by summing the respective samples in channel B and channel C; Intermediate channel C-D is generated by summing the respective samples in channel C and channel D; and intermediate channel D-A is generated by summing the respective samples in channel D and channel A. Optionally, another (9th channel) intermediate channel can be generated by summing the values of all four channels. This summing operation of the values in the different adjacent channels implements non-coherent integration, which as is well known in the art, results in the attenuation of the noise with respect to the true signal.

Once generated, each sample (or combination thereof, e.g. *I* summed values) of the intermediate channels can be associated with a respective value based on a predefined criterion as described earlier with reference to block **505.**

A binary matrix (assuming that the summed values are assigned with either 0 or 1) containing *I* columns and **K** rows is generated and the values assigned to each summed value of a PRI are inserted in respective cells in a single row in the binary matrix. Thus, according to the example expounded herein, a binary matrix containing 1 million horizontal 1-bit cells is generated for storing the values assigned to each of the 1 million summed values of a single PRI. Each value is inserted to a respective cell i according to the order of appearance in the respective PRI.

According to one example, a logical OR can be performed on each respective (ith) value of all channels (4 channels of 4 respective quarters and the generated intermediate channels) in order to obtain consolidated values from all (e.g. 8) channels. In case the OR operation results in a true value the respective (ith) value is assigned to be 1, otherwise the respective (ith) value is assigned to be 0 (block **507**). The operations described above with reference to block **506** and **507** can be performed, for example, with the help of intermediate channels generator **408.**

At block **509** it is determined how many rows in the binary matrix have been occupied with values assigned to summed-values of a respective PRI. According to one example, when a given PRI is being processed the PRI is designated with a corresponding PRI index (*j*) indicating its sequential position.

Accordingly, at block **509** the value of the PRI index *j* can be compared with the value of **K**. In case the PRI index is smaller than **K** (i.e. j<K), the process proceeds to block **513** where the value assigned to each summed value (e.g. 0 or 1 resulting from the OR operation described above) is inserted to a respective cell *i* in row *k*, (e.g. *k = j*) of the binary matrix and continues with the processing of the next PRI (at block **503**).

In case PRI index $j$ = K, the process proceeds to block **515** where the value assigned to each summed value (e.g. 0 or 1 resulting from the OR operation described above) is inserted to a respective cell $i$ in row $K$ of the binary matrix. The process proceeds to block **517** where vertical summation of each cell i in K rows is performed, as explained below in detail.

Otherwise, in case PRI index $j$ is greater than K, the earliest row (e.g. row $k$=0) in the binary matrix is deleted (block **511**), all rows in the binary matrix are pushed down by one row, and a new row corresponding to the next PRI is inserted at the top of the binary matrix (e.g. at row $k$=K-1) (block **515**).

The operations described above with reference to blocks **503** to **515** are repeated for each PRI of the received signal. Matrix management module **411** in target detection unit **410** can be configured to perform the operation described herein with reference to blocks **509** to **515**.

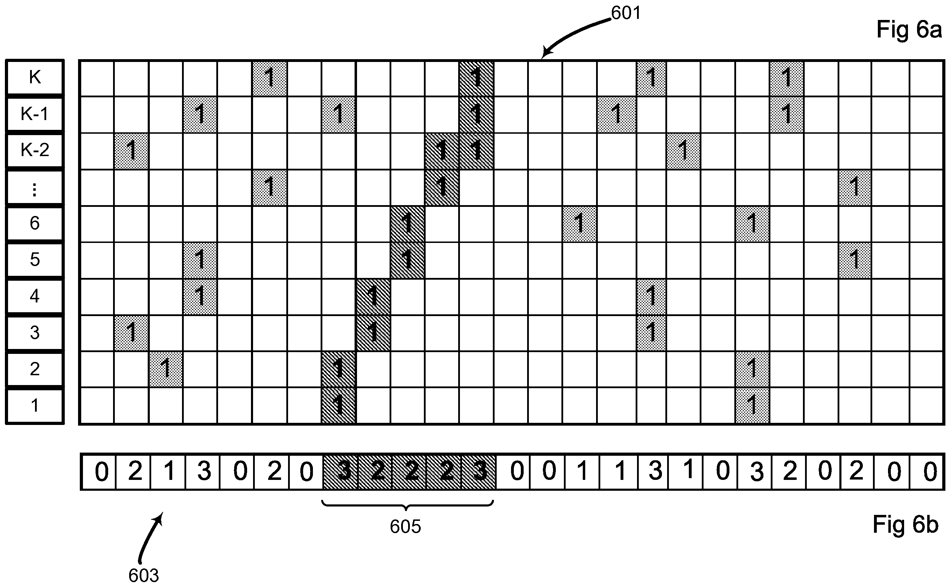

**Fig. 6a** schematically illustrates an example of a binary matrix in small scale, in accordance with the presently disclosed subject matter. **Fig. 6a** illustrates a matrix containing **10** rows where the marking in each cell is indicated by means of 1 in case the respective summed value exceeds the threshold, and by means of 0 otherwise. Note that the use of 1 and 0 is merely a non-limiting example and other values can be alternatively assigned in order to denote summed values above and below the threshold. Also, in other examples 1 can be used to denote values below the threshold and 0 to denote values above the threshold.

Note that there are sporadic instances (i.e. false alarms) of cells indicated by **1** across the entire matrix. This stems for example, from random peaks of noise which exceeded the threshold. However, only in one area there is a consistent sequence of cells denoted by 1 vertically extending from top to bottom (the respective cells in **Fig. 6a** are indicated by diagonal lines in the background).

As explained above, the intensity of the received signal is relatively low (e.g. due to the relatively low pulse power of the laser designator), hindering the detection phase which attempts to discern between true signals and noise. It is therefore required to increase the certainty of detecting a true signal. The consistent appearance of cells with energy intensity above threshold, indicated by 1, within a restricted range of indexes in all rows (or almost all rows) of the binary matrix, can serve as an indication of samples representing a true signal. In order to detect such ranges of indexes, a summation of the values in respective cells in K rows is performed (block **517**).

To this end, a summation vector containing $I$ cells is generated and for every cell $i$ (from among $I$ cells), K vertical cells are summed, giving rise to $I$ vertical sums. Each vertical sum is inserted in a respective cell $i$ in a summation vector. Thus, according to the example expounded herein, a summation vector (in the current example a vertical summation vector) containing 1 million cells is generated and the resulting vertical sums are inserted in the respective cells in the vertical summation vector. **Fig. 6b** schematically illustrates a summation vector, in accordance with the presently disclosed subject matter. Note that each cell i in the summation vector **603** contains a value corresponding to the summation of the respective cells i in K rows of matrix **601**.

Each K row represents a single bulk. As mentioned above, once **K** (e.g. **10**) rows are occupied in the binary matrix, the next row is inserted to the binary matrix (corresponding to the next PRI) at the top of the binary matrix (row **K** in **Fig. 6a**) and the earliest row in the binary matrix is deleted (row 1 in **Fig. 6a**), thereby generating a new bulk with K rows.

As is well known in the art, there is a tradeoff between the size of the processed data (which may influence the quality of the obtained result) and the processing time. Accordingly, the value of K may vary depending for example on the available processing speed and the required probability of detection (POD). According to one non-limiting example, **K=10,** where a vertical summation is performed for every 10 rows, each row corresponding to one PRI. According to this example, the size of each cell in the vertical summation vector is at least 4 bits.

The summation procedure can be performed substantially simultaneously for all $I$ cells within a bulk. **Figs. 6a** and **6b** demonstrate summation of a bulk. The information generated within the summation vector, in respect of each bulk, can be stored in a data-repository (e.g. computer memory **121**).

As mentioned above and illustrated in **Fig. 6a** cells comprising the value of 1 are clustered within a limited range of horizontal indexes within a binary matrix and are not restricted to a single index. One of the reasons for the spread of the cells is the speed of the intercepting platform. Assuming for example, a PRI of **50** milliseconds and an estimated intercepting platform speed of around **300** meter/sec, a **15** meter drift of the true reflected signal is expected for each PRI. Optionally, in order to compensate, at least partially, for this drift, the indexes of each new row (representing a new PRI) are shifted by one index with respect to the previous row, which is roughly equivalent to 50 nanoseconds (calculated by 15 meters divided by the speed of light).

According to the non-limiting example illustrated in **Fig. 4,** matrix management module **411** comprises a summation module **413** which is configured to perform the operations described above with reference to block **517.**

As may be recalled, according to the example specified herein, it is expected that for each PRI comprising **1** million summed values, around 4000 summed values above threshold (denoted by 1) are detected. The summation of cells enables to narrow down the searching area for true signals by restricting the search to small windows extending over a limited number of cells.

Note that summation vector in **Fig. 6b** includes a region comprising a cluster of cells (indicated by reference number **605**), which is characterized by higher values in comparison to other regions in the summation vector. Such clusters identify ranges of indexes of cells corresponding to summed values above threshold (e.g. indicated by 1), which consistently appear throughout the K rows of a given bulk. Therefore, such clusters (referred herein as "candidate clusters") potentially represent an area within a PRI that includes true signal portions.

In order to identify candidate clusters within a summation vector each summation vector (corresponding to a certain bulk) undergoes a filtering process (block **519**). Filtering can be carried out with the help of filtering module **415** in target detection unit **410.**

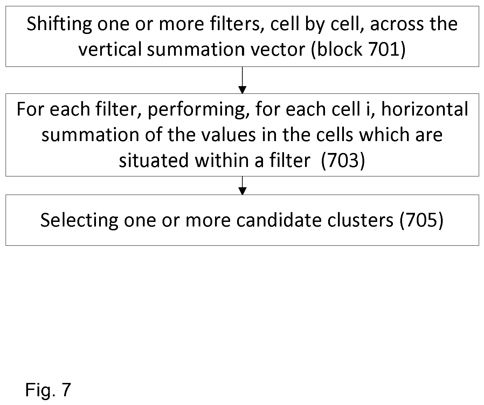

Turning now to **Fig. 7,** this shows a flowchart illustrating an example of operations carried out during a filtering process, in accordance with the presently disclosed subject matter. One or more filters can be used for identifying candidate clusters in the summation vector where each filter is a sliding window of a predefined size. The number and size of the filters is selected based on the estimated number and size of uncertainties. Uncertainties can include for example, uncertainty in respect of the Doppler frequency shift of the pulse rate, uncertainties due to the velocity of the platform, uncertainties due to the discrepancy between the sampling clock and clock of the laser designator and uncertainty with respect to the speed of the target.

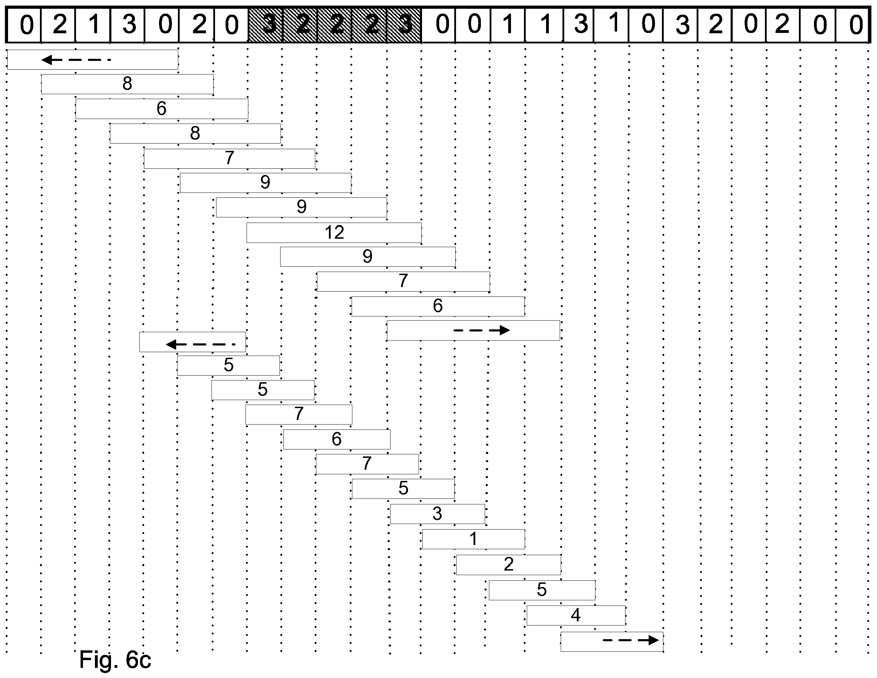

According to one example, the filter is shifted cell by cell, across a vertical summation vector (block **701**). Thus, according to this example the filter can be implemented as a FIR filter with coefficient of 1. For each cell $i$ in the summation vector, a summation (according to this example "horizontal summation") of the values within the cells which reside within the sliding window (i.e. the filter), is calculated. Each value is associated with the respective indexes indicting the position of the filter in the vertical summation vector (block **703**). **Fig. 6c** schematically illustrates the sliding window of two filters along the summation vector. The two filters are represented by rectangles and the values denoted within the rectangles at each position indicate the horizontal summation value at the respective position of the filter.

From the entire number of horizontal summation values calculated for a given vertical summation vector (where this number can be equal, according to one example, to the number of cells in the vertical summation vector less the size of the filter) a predefined number of horizontal summations having a value which matches a predefined criterion are selected (block **705**).

For example, assuming that summed values which exceed the threshold are associated with a value which is greater than the value associated with summed values which do not exceed the threshold (e.g. 1 and 0, respectively), horizontal summation values having the highest values are selected as candidate clusters. If, on the other hand, summed values which exceed the threshold are associated with a value which is lower than the value associated with summed values which do not exceed the threshold (e.g. 0 and 1, respectively), horizontal summation values having the lowest values are selected as candidate clusters.

Filtering module **415** can be configured for example, to select from the filters, all horizontal summation values which are greater than 5 and to select the 20 highest values in case more than 20 horizontal summations comply with this criterion.

Reverting now to **Fig. 5,** optionally in order to reduce the number of candidate clusters, the filtering process can also include a shrinking operation directed for diluting the final batch of candidate clusters (block **521**). During the shrinking operation, candidate clusters identified in the same vertical summation vector are compared and in case a plurality of candidate clusters are characterized by ranges of indexes which match a predefined criterion, only one of the candidate clusters is selected and the other candidate clusters are discarded, thereby diluting the number of candidate clusters. For example candidate clusters which are characterized by overlapping indexes can be identified, redundant candidate clusters are discarded, and only a single candidate cluster is retained. For instance, assuming a 10 cells long filter identifies a candidate cluster, which is inclusive of another candidate cluster, which is identified by a 5 cells long filter, during the shrinking operation the shorter candidate cluster can be discarded. Also, during the shrinking operation candidate clusters which are partially overlapping or are located at close indexes can be diluted based on predefined tolerance. The tolerance defines proximity and/or overlapping between the candidate clusters which merits discarding one of the candidate clusters. Filtering module **415** can be configured to perform the shrinking operation as well.

Information with respect to the selected candidate clusters can be stored in a designated data-structure e.g. in a candidate mapping-table (block **523**). The stored information includes for example, the indexes of the respective cells of each candidate cluster within the vertical summation vector, the size of the filter, and the respective horizontal summed value. The stored indexes can be for example the indexes at the center of the sliding window or the indexes located at one or both ends of the sliding window.

Assuming for example, that 5 different filters are used, and for each filter the 20 highest horizontal summation values are stored, at the end of the filtering process, 100 candidate clusters are obtained and stored for a given vertical summation vector. As explained above, the number of the candidate clusters can be reduced by the shrinking process.

Mapping of candidate clusters (e.g. in candidate mapping-table) enables to select from the candidate clusters a final candidate cluster representing an area within the raw data, comprising samples corresponding to true signals. To this end, the candidate mapping-table also includes a detection count parameter, which indicates the number of times the same candidate cluster is identified. As mentioned above, a new vertical summation vector is calculated for each new bulk. Each new vertical summation vector is filtered and a new group of candidate clusters are identified. The new candidate clusters are inserted into the candidate mapping-table. In case a first candidate cluster which is identified in a vertical summation vector is determined to be sufficiently similar (e.g. characterized by identical or close indexes) to a second candidate cluster, which already exists in the mapping-table (i.e. a candidate cluster which has been identified with respect to a previous vertical summation vector) the first and second candidate clusters are associated with the same entry in the candidate mapping-table and the detection-count parameter associated with that entry is incremented by one. Similarity between candidate clusters can be determined based on a different criterion, which may be similar, for example, to the criterion applied during the shrinking process described above with reference to block **521**. The operations described with reference to block **523** can be performed with the help of mapping-table manager **417**.

Since unlike noise which appears at random locations within a PRI, true signals appear consistently within a certain range of samples, it is expected that while those candidate clusters which represent false alarms would appear randomly across the summation vector and would not be tied to specific indexes, candidate clusters which represent true signals would be repeatedly identified in association with the same indexes.

Accordingly, after a predefined number of cycles (where in each cycle a bulk is processed) a final candidate cluster is selected from candidate mapping-table (block **525**). In general the candidate cluster with a detection count parameter with the highest value is selected. In case more than one candidate cluster shows identical detection count values, the system can be operable to run for a few additional cycles and then select the final candidate cluster. Selection of the final candidate cluster can be carried out by final candidate selection module **419**.

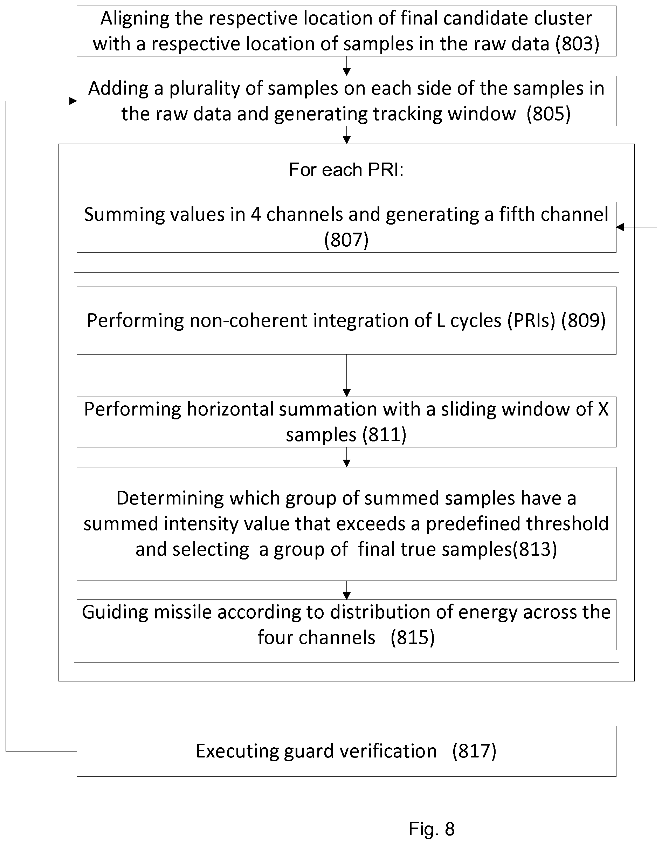

Proceeding now to **Fig. 8,** which is a flowchart showing operations which are carried out during target tracking process, in accordance with the presently disclosed subject matter. At block **801** the respective location of the final candidate cluster is located within the raw-data. As explained above, sampler 111 is operating at a sampling rate of **100** MHz and samples 5 million samples per each PRI. The 5 million samples represent the raw-data. Recall that each candidate cluster is identified, in the candidate mapping-table, by one or more indexes. Each index corresponds to a cell in the binary matrix, where each cell represents summation of 5 samples, each sample extending over **10** nanoseconds and the entire cell extending over 50 nanoseconds. Thus, in order to locate the position of the final candidate cluster in the raw data, at least one of the indexes within the final candidate cluster is aligned with the respective samples in the raw data of at least 4 channels A, B, C and D. For example, the central index of a final candidate cluster can be aligned with the respective **5** samples in the raw-data. As mentioned above the raw-data can also be indexed, thereby facilitating the alignment of the final candidate cluster to the raw-data.

Once the final candidate cluster is located within the raw-data, a plurality of samples are added on each side of the identified samples in order to create a tracking window for the purpose of tracking the target (block **805**). The extension of samples on both sides of the tracking window is made in order to compensate for the uncertainties mentioned above.

According to one non-limiting example, 250 samples are added on each side of each final candidate cluster thereby obtaining a tracking window of 500 samples. The tracking window enables to restrict the tracking of a target to a small region within the entire raw-data where true signal portions are expected to be located. Tracking window generator **421** in target tracking unit can be configured to perform the operations described above with reference to blocks **803** and **805**.

Since the data within the tracking window is of considerable smaller size in comparison to the data within a full PRI, it is now possible to store this data and process the stored data. Accordingly, the raw data corresponding to the tracking window of each of the 4 channels is stored in data-repository (e.g. computer memory **121**).

In case the energy which is reflected from the target falls in the center of the 4 quarters sensor, the received energy is divided between the 4 quarters and the energy received by each individual quarter may not be sufficient for detection. Therefore, in some cases respective samples in the window of all 4 channels can be summed in order to generate channel **E** representing the summed energy received in all 4 channels (block **807**). According to the example illustrated in **Fig. 4,** in order to generate a new channel **E** the data with respect to all 4 tracking windows of each respective channel is transmitted to channel generator **431,** which is configured to combine the energy in all 4 tracking windows and create channel **E** as described above.

The following operations described below with reference to bock **809** to **815** are performed individually on all 5 channels **A** to **E**. Optionally non-coherent integration of L cycles (where a new PRI is received in each cycle) is performed with respect to each one of the (500) samples within the window (block **809**). The non-coherent integration will strengthen the inherent low signal to noise ratio of each PRI by a factor of $\sqrt{L}$. For example, non-coherent integration can be performed for every two consecutive cycles improving the signal to noise ratio by $\sqrt{2}$. Non-coherent integration can be performed by true samples identifier module **423** in target tracking module **420.**

As mentioned above the laser designator works with a pulse width of about **20-25** nanoseconds which is generated by the laser designator and expanded to around 80 nanoseconds. Accordingly, each pulse (i.e. true signal) spreads over 8 samples of the raw-data (i.e. each sample being around 10 nanoseconds). In order to identify the 8 samples of the true signal within the 500 samples window and obtain a value that represents at least a substantial portion of the energy reflected in a single pulse, horizontal summation of a sliding window of a predefined size (comprising predefined number of samples) can be performed. The sliding window can be shifted sample by sample across the 500 samples window and a summation of X samples is performed for each sample (block **811**). The size of the sliding window is determined based on the length of the laser pulse. In the current example, where a pulse is spread across 8 samples, the size of the sliding window can be around 8 samples long (X~8).

Assuming that for mathematical simplicity a sliding window 10 samples long is used, at block **813** the summed intensity value of each 10 samples is compared to a predefined threshold and the samples corresponding to summed intensity values which exceed the threshold are selected as final true samples to be used for tracking the target. In case more than one summed intensity value exceeds the threshold value, a preferred summed intensity value is selected based on predefined logic. For example, according to a default selection logic, the final true samples located closest to the center of the 500 samples window are selected. According to another example, in case the area between the sensor and the target is filled with obstructive material such as dust, the final true sample which is closest to the far end of the 500 samples window is selected, as other samples with intensity value above the threshold are likely to result from reflection of energy from the obstructive material. The operation described above with reference to block **811** and **813** can be performed by true samples identifier module **423.**

At this point a group of final true samples is identified within the raw data for each of channels **A** to **E.** The intensity of the sample from all 5 channels is determined and the guiding of the intercepting platform is carried out based on the distribution of energy across the 4 quarters, as known in the art (block **815**). Guiding unit **435** is operable to generate guiding instructions for the intercepting platform based on the received intensity of energy in the 5 channels.

The operations described above with reference to blocks **807** to **815** are repeated for every PRI until the intercepting platform reaches its designated target. In each new cycle the tracking window can be shifted along the PRI in order to maintain the position of the final true sample with respect to the tracking window. For example in case the selected final true sample was initially located near the center of the tracking window, the tracking window is shifted so the location of the final true sample is maintained at the same location, near the center of the tracking window.

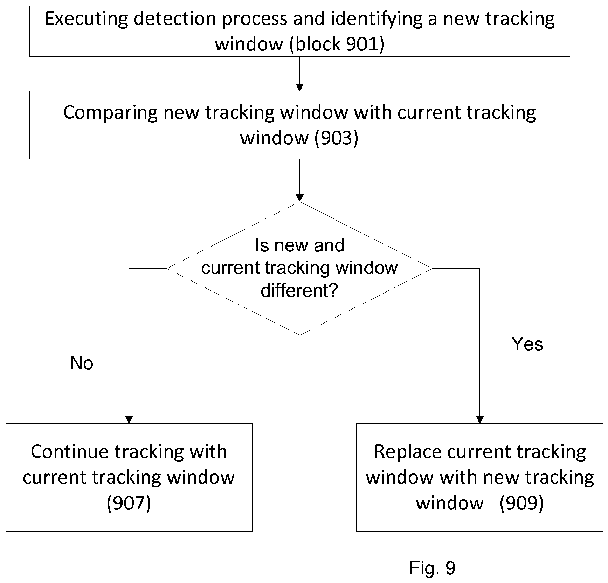

**Fig. 9** is a flowchart illustrating the operations performed in a guard process, in accordance with the presently disclosed subject matter. In some cases it may occur that the tracking window is erroneously focused on samples which do not represent a designated target. For example, it may occur that high intensity noise was erroneously detected by target detection module **410** as the true signal. In such a case, tracking module would continuously attempt to track the source of the noise and the intercepting platform would be guided towards that direction.

In order to avoid this type of error, a guard process can be executed (block **817**). During the guard process (or target verification process) the target detection process is continuously performed along with the target tracking process. The detection process repeatedly detects a final candidate cluster and every predefined number of cycles the operations described above with reference to blocks **803** and **805** are performed in order to generate a new tracking window based on the detected final candidate cluster (block **901**). The location of the new tracking window is compared with the location of the current tracking window, which is being used for tracking the target (block **903**). In case a discrepancy, which is greater than a predefined threshold, is found between the locations of the two tracking windows, the current tracking window is replaced by the new tracking window and the tracking process continues based on the new tracking window (block **909**). Note that target tracking unit **420** in **Fig. 3** comprises a guard module **425,** which is configured to run and control a guard process with the help of target detection unit **410** for executing the operations related to identification of the tracking window.

It will also be understood that the system according to the presently disclosed subject matter may be a suitably programmed processing unit. Likewise, the presently disclosed subject matter contemplates a computer program being readable by a computer processor for executing the method of the presently disclosed subject matter. The presently disclosed subject matter further contemplates a machine-readable memory tangibly embodying a program of instructions executable by the machine for executing the method of the presently disclosed subject matter.

It should be further understood that certain embodiments of the presently disclosed subject matter are applicable to the architecture of a laser seeker described with reference to **Figs. 2** and **4.** However, the invention is not bound by the specific architecture; equivalent and/or modified functionality may be consolidated or divided in another manner and may be implemented in any appropriate combination of software, firmware and hardware.

It is to be understood that the presently disclosed subject matter is not limited in its application to the details set forth in the description contained herein or illustrated in the drawings. The presently disclosed subject matter is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the present presently disclosed subject matter.

**Claims**

1. A method of detecting a signal reflected from a target (3) designated by a pulse laser spot, the method comprising:

   receiving a signal comprising true signal portions reflected from said target, and noise;
   the method further comprising:

   for each one of a plurality of pulse repetition intervals, PRI, of said received signal, sampling a plurality M of samples ; each sample having a respective intensity value; each sample or each combination thereof, wherein the combination comprises summation of a plurality of consecutive samples, in a sampled PRI is assigned with a respective index i; assigning, for each sample of said plurality of samples or for each of said combination thereof, at least a first value or a second value based on a comparison of the respective intensity value of each sample or of each combination thereof to a given threshold value;
   performing summation of respective $i^{th}$ indexed assigned values of a plurality K of PRIS, and obtaining respective indexed summed values; identifying one or more candidate clusters from among said indexed summed values; selecting a final candidate cluster from among said one or more candidate clusters; said final candidate cluster representing a range of indexes that corresponds to true signal portions from among the plurality of samples;
   locating said final candidate cluster with respective samples of an incoming PRI, thereby detecting an area within said signal which comprises the true signal portions.

2. The method according to claim 1 wherein said signal is received by a 4 quarters laser sensor (105), each quarter associated with a respective processing channel,

   wherein said sampling and assigning is performed by each of said 4 quarters, the method further comprising:

   performing a logical OR on each respective $i^{th}$ indexed assigned value in each of said 4 processing channels, thereby obtaining a consolidated value from all 4 processing channels and performing said summation with said consolidated value.

3. The method according to any one of claims 1 to 2 wherein said signal is received by a 4 quarters laser sensor (105), each quarter associated with a respective processing channel, wherein said sampling and assigning is performed for each of said 4 quarters, the method further comprising:

   summing values of respective samples received in at least each pair of adjacent quarters, thereby generating 4 intermediate processing channels; performing said assigning on said 4 intermediate processing channels; and performing a logical OR operation on each respective $i^{th}$ indexed assigned value in each of said 4 processing channels and said 4 intermediate processing channels, thereby obtaining a consolidated value from all 8 processing channels.

4. The method according to any one of the preceding claims further comprising:

   adding a plurality of samples on each side of said area and generating a tracking window; and identifying at least one final true sample within said tracking window, said at least one final true sample representing energy of said laser spot reflected from said target;
   wherein said identifying further comprises:

   shifting a sliding window of a predefined size along samples in said tracking window; performing summation of the intensity value of samples in the sliding window in each position of the sliding window; identifying a position of the sliding window where a respective group of summed samples have a summed intensity value that exceeds a predefined threshold; and selecting one of the groups of summed samples as final true samples.

5. The method according to any one of the preceding claims further comprising:

   prior to said assigning, summing groups of *n* consecutive samples of said M samples, thereby obtaining a combination of samples represented by *I* summed values.

6. The method according to any one of the preceding claims wherein the summed values are represented in a summation vector and wherein said identifying one or more candidate clusters includes a filtering process comprising:

> shifting at least one filter along values in said summation vector, wherein a filter is represented by a sliding window of a predefined size;
> for each value in said summation vector:
>
>> summing values located within said at least one filter, thereby generating a respective horizontal summation value;
>> selecting one or more horizontal summation values, having values matching a predefined criterion, as candidate clusters.

7. The method according to any one the preceding claims wherein said signal is received by a 4 quarters laser sensor (105), each quarter associated with a respective processing channel, said laser sensor being fixed to an intercepting platform, the method further comprising:

> summing values in 4 tracking windows of said 4 respective processing channels and generating a fifth channel;
> identifying at least one final true sample for each processing channel based on multiple channels.

8. The method according to any one of the preceding claims further comprising;
performing a guard process comprising:

> continuously identifying a new tracking window and a new final true sample therein, said final true sample representing energy of said laser spot reflected from said target; and
> in case a discrepancy between said new final true sample and said final true sample is identified, replacing said final true sample with said new final true sample.

9. The method according to any one of the preceding claims wherein a clock associated with a laser designator, designating said pulse laser spot is not synchronized with a clock associated with a sensor configured for receiving said signal.

10. A laser seeker (200) configured for detecting a signal reflected from a target (3) designated by a pulse laser spot, the seeker comprising:

> a sensor (105) associated with at least one processing channel; said processing channel comprising a sampler (111), an accurate clock (405) and a processing unit (120);
the sensor (105) is configured to receive a signal comprising true signal portions reflected from said target, and noise; wherein the sampler (111) and associated accurate clock (405), are configured to sample, for each one of a plurality of pulse repetition intervals, PRI, of said received signal, a plurality M of samples;
the processing unit (120) is configured to perform at least the following operations:

> assign to each sample or combination thereof, wherein the combination comprises summation of a plurality of consecutive samples, in a sampled PRI a respective index i;
> assign, for each sample of said plurality of samples or for each of said combination thereof, at least a first value or a second value based on a comparison of the respective intensity value of each sample or of each combination thereof to a given threshold value;
> sum respective $i^{th}$ indexed assigned values of a plurality K of PRIs, and obtain respective indexed summed values; identify one or more candidate clusters from among said indexed summed values; select a final candidate cluster from among said one or more candidate clusters; said final candidate cluster representing a range of indexes that corresponds to true signal portions from among the plurality of samples; locate said final candidate cluster with respective samples of an incoming PRI, thereby detecting an area within said signal which comprises the true signal portions.

11. The laser seeker according to claim 10 wherein said sensor (105) is a 4 quarters laser sensor, each quarter associated with a respective processing channel, each processing channel comprising a sampler (111) configured to sample a signal received by a respective quarter, said assigning is performed for each of said 4 processing channels, said processing unit is further configured to perform a logical OR on each respective $i^{th}$ indexed assigned value in each of said 4 processing channels, thereby obtaining a consolidated value from all 4 processing channels and sum said consolidated values.

12. The laser seeker according to any one of claims 10 to 11 wherein said sensor (105) is a 4 quarters laser sensor, each quarter associated with a respective processing channel, each processing channel comprising a sampler (111) configured to sample a signal received by a respective quarter, said assigning is performed for each of said 4 processing channels, said processing unit (120) being further configured to:

combine values of respective samples received at each pair of adjacent quarters, thereby generating 4 intermediate processing channels; perform said assigning on said 4 intermediate processing channels; and perform a logical OR operation on each respective $i^{th}$ indexed assigned value in each of said 4 processing channels and said 4 intermediate processing channels, thereby obtaining a consolidated value from all 8 processing channels.

13. The laser seeker according to any one of claims 10 to 12 wherein said processing unit (120) is further configured to add a plurality of samples on each side of said area and generating a tracking window; and identify a final true sample within said tracking window, said final true sample representing energy of said laser spot reflected from said target; and wherein in order to accomplish said identification said processing unit (120) is further configured to: shift a sliding window of a predefined size along samples in said tracking window; perform summation of the intensity value of samples in the sliding window in each position of the sliding window; identify a position of the sliding window where a respective group of summed samples have a summed intensity value that exceeds a predefined threshold; and select one of the groups of summed samples as final true samples.

14. The laser seeker according to any one of claims 10 to 13 wherein said signal is received by a 4 quarters laser sensor (105) each quarter associated with a respective processing channel, said laser sensor being fixed to an intercepting platform, said processing unit (120) being configured to:

identify a final true sample for each processing channel; and find direction to said target based on comparison between the intensity of the final true sample in the different channels.

15. The laser seeker according to any one of claims 10 to 14 wherein the summed values are represented by a summation vector and wherein said processing unit (120) is further configured, as part of said identifying one or more candidate clusters to perform a filtering process during which the processing unit is configured to shift at least one filter along values in said summation vector, wherein a filter is represented by a sliding window of a predefined size; for each value in said summation vector:

to sum values located within said at least one filter, thereby generating a respective horizontal summation value; and to select a predefined number of horizontal summation values, having values matching a predefined criterion, from among all horizontal summation values as candidate clusters.

16. The laser seeker according to any one of claims 10 to 15 wherein said processing unit (120) is further configured to sum values in 4 tracking windows of said 4 respective processing channels and generate a fifth channel; and to identify at least one final true sample for each processing channel based on multiple channels.

17. The laser seeker according to any one of claims 10 to 16 wherein said processing unit (120) is further configured to perform a guard process during which the processing unit is configured to continuously identify a new tracking window and a new final true sample therein, said final true sample representing energy of said laser spot reflected from said target; and in case a discrepancy between said new final true sample and said final true sample is identified, to replace said final true sample with said new final true sample.

18. The laser seeker according to any one of claims 10 to 17 wherein a clock associated with a laser designator, designating said pulse laser spot is not synchronized with said clock (405).

19. The laser seeker according to any one of claims 10 to 18 integrated in a laser system, the laser system further comprising a laser designator configured for designating said pulsed laser spot.

20. A program storage device readable by a computer, tangibly embodying a program of instructions executable by the computer to perform method of detecting a signal reflected from a target designated by a pulse laser spot, the method comprising:

receiving information indicative of a plurality M of samples sampled from each one of a plurality of pulse repetition intervals, PRI, of said received signal reflected from a target designated by a pulse laser spot, the signal comprising true signal portions reflected from said target, and noise; wherein the method comprises:

assigning each sample or each combination thereof, wherein the combination comprises summation of a plurality of consecutive samples, in a sampled PRI with a respective index i; assigning, for each sample of said plurality of samples or for each of said combination thereof, at least a first value or a second value based on a comparison of the respective intensity value of each sample or of each combination thereof to a given threshold value;

performing summation of respective ith indexed assigned values of a plurality K of PRIs, and obtaining respective indexed summed values;

identifying one or more candidate clusters for among said indexed summed values;

selecting a final candidate cluster from among said one or more candidate clusters; said final candidate cluster representing a range of indexes within said summation vector that corresponds to true signal portions from among the plurality of samples;

locating said final candidate cluster with respective samples of an incoming PRI, thereby detecting an area within said signal which comprises the true signal portions.

**Patentansprüche**

1. Verfahren zur Ermittlung eines von einem Ziel (3), das durch einen Pulslaserfleck markiert wird, reflektierten Signals, wobei das Verfahren umfasst:

    Empfangen eines Signals, das tatsächliche Signalbereiche, reflektiert von dem Ziel, und Rauschen umfasst;
    wobei das Verfahren des Weiteren umfasst:

        für jedes Intervall einer Vielzahl an Pulswiederholungsintervallen, PRI, des empfangenen Signals, Abtasten (sampling) einer Vielzahl M an Abtastungen (samples); wobei jede Abtastung einen entsprechenden Intensitätswert aufweist, wobei jeder Abtastung oder jeder Kombination davon, wobei die Kombination die Summierung einer Vielzahl an aufeinanderfolgenden Abtastungen umfasst, in einem abgetasteten PRI ein entsprechender Index i zugewiesen wird;
        Zuweisung mindestens eines ersten Wertes oder eines zweiten Wertes einer jeden Abtastung der Vielzahl an Abtastungen oder jeder Kombination davon, basierend auf einem Vergleich des entsprechenden Intensitätswertes jeder Abtastung oder jeder Kombination davon mit einem vorgegebenen Schwellenwert;
        Durchführung einer Summierung entsprechender i-ter indizierter, zugewiesener Werte einer Vielzahl K an PRIs, und Erhalten entsprechender indizierter summierter Werte; Identifizieren eines oder mehrerer Kandidatencluster unter den indizierten summierten Werten; Auswahl eines endgültigen Kandidatenclusters aus dem einen oder mehreren Kandidatenclustern; wobei der endgültige Kandidatencluster einen Bereich an Indizes repräsentiert, der den tatsächlichen Signalbereichen unter der Vielzahl an Abtastungen entspricht;
        Lokalisieren des endgültigen Kandidatenclusters mit entsprechenden Abtastungen eines eingehenden PRI, wodurch eine Fläche in dem Signal ermittelt wird, die die tatsächlichen Signalbereiche umfasst.

2. Verfahren nach Anspruch 1, wobei das Signal durch einen 4-Viertel-Lasersensor (105) (4 quarters laser sensor) empfangen wird, jedes Viertel mit einem entsprechenden Verarbeitungskanal verbunden ist, wobei das Abtasten und Zuweisen durch jedes der 4 Viertel durchgeführt wird, wobei das Verfahren des Weiteren umfasst:

    Durchführung eines logischen ODER auf jedem entsprechenden i-ten indizierten, zugewiesenen Wert in jedem der 4 Verarbeitungskanäle, wodurch ein konsolidierter Wert von allen 4 Verarbeitungskanälen erhalten wird, und Durchführung der Summierung mit dem konsolidierten Wert.

3. Verfahren nach einem der Ansprüche 1 bis 2, wobei das Signal durch einen 4-Viertel-Lasersensor (105) empfangen wird, jedes Viertel mit einem entsprechenden Verarbeitungskanal verbunden ist, wobei das Abtasten und Zuweisen für jedes der 4 Viertel durchgeführt wird, wobei das Verfahren des Weiteren umfasst:

    Summierung von Werten entsprechender Abtastungen, die in mindestens jedem Paar benachbarter Viertel empfangen werden, wodurch vier Zwischenverarbeitungskanäle erzeugt werden;
    Durchführung der Zuweisung auf den vier Zwischenverarbeitungskanälen; und
    Durchführung einer logischen ODER-Operation auf jedem entsprechenden i-ten indizierten, zugewiesenen Wert in jedem der vier Verarbeitungskanäle und der vier Zwischenverarbeitungskanäle, wodurch ein konsolidierter Wert aus allen 8 Verarbeitungskanälen erhalten wird.

4. Verfahren nach einem der vorstehenden Ansprüche, des Weiteren umfassend:

    Hinzufügen einer Vielzahl an Abtastungen auf jede Seite der Fläche und Erzeugen eines Tracking-Fensters; und

Identifizieren von mindestens einer endgültigen tatsächlichen Abtastung in dem Tracking-Fenster, wobei die mindestens eine endgültige tatsächliche Abtastung die Energie des von dem Ziel reflektierten Laserflecks repräsentiert; wobei die Identifizierung des Weiteren umfasst:

Verschieben eines gleitenden Fensters von vordefinierter Größe entlang der Abtastungen in dem Tracking-Fenster;

Durchführen einer Summierung der Intensitätswerte der Abtastungen in dem gleitenden Fenster in jeder Position des gleitenden Fensters;

Identifizieren einer Position des gleitenden Fensters, wo eine entsprechende Gruppe der summierten Abtastungen einen summierten Intensitätswert aufweist, der einen vordefinierten Schwellenwert überschreitet; und

Auswahl einer der Gruppen aus summierten Abtastungen als endgültige tatsächliche Abtastungen.

5. Verfahren nach einem der vorstehenden Ansprüche, des Weiteren umfassend:

vor der Zuweisung, Summierung von Gruppen von *n* aufeinanderfolgenden Abtastungen der M Abtastungen, wodurch eine Kombination von Abtastungen erhalten wird, repräsentiert durch *l* summierte Werte.

6. Verfahren nach einem der vorstehenden Ansprüche, wobei die summierten Werte in einem Summierungsvektor wiedergegeben werden, und wobei das Identifizieren eines oder mehrerer Kandidatencluster ein Filterverfahren einschließt, umfassend:

Verschieben von mindestens einen Filter entlang der Werte in dem Summierungsvektor, wobei ein Filter durch ein gleitendes Fenster von vordefinierter Größe repräsentiert wird;

für jeden Wert in dem Summierungsvektor:

Summierung der Werte, die in dem mindestens einen Filter liegen, wodurch ein entsprechender horizontaler Summierungswert erzeugt wird;

Auswahl eines oder mehrerer horizontaler Summierungswerte, die Werte aufweisen, die zu einem vordefinierten Kriterium passen, als Kandidatencluster.

7. Verfahren nach einem der vorstehenden Ansprüche, wobei das Signal durch einen 4-Viertel-Lasersensor (105) empfangen wird, jedes Viertel mit einem entsprechenden Verarbeitungskanal verbunden ist, wobei der Lasersensor an eine Abfangplattform befestigt ist, wobei das Verfahren des Weiteren umfasst:

Summieren der Werte in 4 Tracking-Fenstern der 4 entsprechenden Verarbeitungskanäle und Erzeugen eines fünften Kanals;

Identifizieren von mindestens einer endgültigen tatsächlichen Abtastung für jeden Verarbeitungskanal basierend auf mehreren Kanälen.

8. Verfahren nach einem der vorstehenden Ansprüche, des Weiteren umfassend:

Durchführung eines Schutzprozesses (guard process), umfassend:

kontinuierliches Identifizieren eines neuen Tracking-Fenster und einer neuen endgültigen tatsächlichen Abtastung darin, wobei die endgültige tatsächliche Abtastung die Energie des von dem Ziel reflektierten Laserflecks wiedergibt; und

in dem Fall, dass eine Diskrepanz zwischen der neuen endgültigen tatsächlichen Abtastung und der endgültigen tatsächlichen Abtastung identifiziert wird, Ersetzen der endgültigen tatsächlichen Abtastung durch die neue endgültige tatsächliche Abtastung.

9. Verfahren nach einem der vorstehenden Ansprüche, wobei ein Taktgeber, der mit einem Lasermarkierer verbunden ist, der den Pulslaserfleck festlegt, nicht mit einem Taktgeber synchronisiert ist, der mit einem Sensor verbunden ist, der für das Empfangen des Signals konfiguriert ist.

10. Lasersucher (200), konfiguriert zur Ermittlung eines Signals, das von einem Ziel (3) reflektiert wird, das durch einen Pulslaserfleck markiert wird, wobei der Sucher umfasst:

einen mit mindestens einem Verarbeitungskanal verbundenen Sensor (105); wobei der Verarbeitungskanal einen Abtaster (111), ein hochgenauer Taktgeber (405) und eine Verarbeitungseinheit (120) umfasst;

wobei der Sensor (105) konfiguriert ist, ein Signal zu empfangen, das tatsächliche Signalbereiche, die von dem Ziel reflektiert werden, und Rauschen umfasst;

wobei der Abtaster (111) und der verbundene hochgenaue Taktgeber (405) konfiguriert sind, für jedes Intervall aus einer Vielzahl von Pulswiederholungsintervallen, PRI, des erhaltenen Signals, eine Vielzahl M an Abtastungen abzutasten;

wobei die Verarbeitungseinheit (120) konfiguriert ist, mindestens die nachstehenden Operationen durchzuführen:

Zuweisen eines entsprechenden Index i einer jeden Abtastung oder Kombination davon, wobei die Kombination die Summierung einer Vielzahl an aufeinanderfolgenden Abtastungen umfasst, in einer abgetasteten PRI;

Zuweisung mindestens eines ersten Wertes oder eines zweiten Wertes einer jeden Abtastung der Vielzahl an Abtastungen oder jeder der Kombinationen davon, basierend auf einem Vergleich des entsprechenden Intensitätswertes jeder Abtastung oder jeder Kombination davon mit einem vorgegebenen Schwellenwert;

Summieren entsprechender i-ter indizierter, zugewiesener Werte einer Vielzahl K an PRIs, und Erhalten entsprechender indizierter summierter Werte; Identifizieren eines oder mehrerer Kandidatencluster unter den indizierten summierten Werten; Auswahl eines endgültigen Kandidatenclusters unter den einen oder mehreren Kandidatenclustern; wobei der endgültige Kandidatencluster einen Bereich an Indizes repräsentiert, der den tatsächlichen Signalbereichen unter der Vielzahl an Abtastungen entspricht; Lokalisieren des endgültigen Kandidatenclusters mit entsprechenden Abtastungen eines eingehenden PRI, wodurch eine Fläche in dem Signal ermittelt wird, die die tatsächlichen Signalbereiche umfasst.

**11.** Lasersucher nach Anspruch 10, wobei der Sensor (105) ein 4-Viertel-Lasersensor ist, jedes Viertel mit einem entsprechenden Verarbeitungskanal verbunden ist, jeder Verarbeitungskanal einen Abtaster (111) umfasst, der konfiguriert ist, das durch ein entsprechendes Viertel empfangene Signal abzutasten, wobei die Zuweisung für jeden der vier Verarbeitungskanäle erfolgt, die Verarbeitungseinheit des Weiteren konfiguriert ist, auf jedem entsprechenden i-ten indizierten, zugewiesenen Wert in jedem der 4-Verarbeitungskanäle ein logisches ODER durchzuführen, wodurch ein konsolidierter Wert von allen 4 Verarbeitungskanälen erhalten wird, und die konsolidierten Werte zu summieren.

**12.** Lasersucher nach einem der Ansprüche 10 bis 11, wobei der Sensor (105) ein 4-Viertel-Lasersensor ist, jedes Viertel mit einem entsprechenden Verarbeitungskanal verbunden ist, jeder Verarbeitungskanal einen Abtaster (111) umfasst, der konfiguriert ist, das durch ein entsprechendes Viertel empfangene Signal abzutasten, wobei die Zuweisung für jeden der vier Verarbeitungskanäle erfolgt, wobei die Verarbeitungseinheit (120) des Weiteren konfiguriert ist, um:

Werte entsprechender Abtastungen, erhalten an jedem Paar angrenzender Viertel, zu kombinieren, wodurch 4 Zwischenverarbeitungskanäle erzeugt werden; die Zuweisung auf den 4 Zwischenverarbeitungskanälen durchzuführen; und eine logische ODER-Operation auf jedem entsprechenden i-ten indizierten, zugewiesenen Wert in jedem der 4-Verarbeitungskanäle und den 4 Zwischenverarbeitungskanälen durchzuführen, wodurch ein konsolidierter Wert von allen 8 Verarbeitungskanälen erhalten wird.

**13.** Lasersucher nach einem der Ansprüche 10 bis 12, wobei die Verarbeitungseinheit (120) des Weiteren konfiguriert ist, eine Vielzahl an Abtastungen auf jede Seite der Fläche hinzuzufügen und ein Tracking-Fenster zu erzeugen; und eine endgültige tatsächliche Abtastung in dem Tracking-Fenster zu identifizieren, wobei die endgültige tatsächliche Abtastung die Energie des Laserflecks, der von dem Ziel reflektiert wird, repräsentiert; und wobei die Verarbeitungseinheit (120), um die Identifikation zu vollenden, des Weiteren konfiguriert ist, um: ein gleitendes Fenster von vordefinierter Größe entlang der Proben in dem Tracking-Fenster zu verschieben; eine Summierung der Intensitätswerte der Abtastungen in dem gleitenden-Fenster in jeder Position des gleitenden Fensters durchzuführen; eine Position des gleitenden Fensters, wo eine entsprechende Gruppe der summierten Abtastungen einen Summenintensitätswert aufweist, der einen vordefinierten Schwellenwert überschreitet; zu identifizieren; und eine der Gruppen aus summierten Abtastungen als endgültige tatsächliche Abtastungen auszuwählen.

**14.** Lasersucher nach einem der Ansprüche 10 bis 13, wobei das Signal durch einen 4-Viertel-Lasersensor (105) empfangen wird, jedes Viertel mit einem entsprechenden Verarbeitungskanal verbunden ist, der Lasersensor an eine Auffangplattform befestigt ist, wobei die Verarbeitungseinheit (120) konfiguriert ist, um:

eine endgültige tatsächliche Abtastung für jeden Verarbeitungskanal zu identifizieren; und eine Richtung zu dem Ziel zu finden, basierend auf einem Vergleich zwischen der Intensität der endgültigen tatsächlichen Abtastung in den verschiedenen Kanälen.

**15.** Lasersucher nach einem der Ansprüche 10 bis 14, wobei die summierten Werte durch eine Summierungsvektor wiedergegeben werden, und wobei die Verarbeitungseinheit (120) des Weiteren konfiguriert ist, als Teil der Identifizierung eines oder mehrerer Kandidatencluster, ein Filterverfahren durchzuführen, während dem die Verarbeitungseinheit konfiguriert wird, mindestens einen Filter entlang der Werte in dem Summierungsvektor zu verschieben, wobei ein Filter durch ein gleitendes Fenster von vordefinierter Größe repräsentiert wird; und für jeden Wert in dem Summierungsvektor:

die in dem mindestens einen Filter gelegenen Werte zu summieren, wodurch ein entsprechender horizontaler Summierungswert erzeugt wird; und eine vordefinierte Zahl an horizontalen Summierungswerten, die Werte aufweisen, die zu einem vordefinierten Kriterium passen, unter allen horizontalen Summierungswerten als Kandidatencluster auszuwählen.

16. Lasersucher nach einem der Ansprüche 10 bis 15, wobei die Verarbeitungseinheit (120) des Weiteren konfiguriert ist, um Werte in vier Tracking-Fenstern der 4 entsprechenden Verarbeitungskanäle zu summieren und einen fünften Kanal zu erzeugen; und um mindestens eine endgültige tatsächliche Abtastung für jeden Verarbeitungskanal basierend auf mehreren Kanälen zu identifizieren.

17. Lasersucher nach einem der Ansprüche 10 bis 16, wobei die Verarbeitungseinheit (120) des Weiteren konfiguriert ist, um ein Schutzverfahren durchzuführen, w Verarbeitungseinheit konfiguriert wird, ein neues Tracking-Fenster und eine neue endgültige tatsächliche Abtastung darin zu identifizieren, wobei die endgültige tatsächliche Abtastung die Energie des Laserflecks, der von dem Ziel reflektiert wird, repräsentiert; und in dem Fall, dass eine Diskrepanz zwischen der neuen endgültigen tatsächlichen Abtastung und der endgültigen tatsächlichen Abtastung identifiziert wird, die endgültige tatsächliche Abtastung durch die neue endgültige tatsächliche Abtastung zu ersetzen.

18. Lasersucher nach einem der Ansprüche 10 bis 17, wobei ein Taktgeber, der mit einem Lasermarkierer verbunden ist, der den Pulslaserfleck festlegt, nicht mit dem Taktgeber (405) synchronisiert ist.

19. Lasersucher nach einem der Ansprüche 10 bis 18, der in einem Lasersystem integriert ist, wobei das Lasersystem des Weiteren einen Lasermarker umfasst, der zum Festlegung des Pulslaserflecks konfiguriert ist.

20. Programmspeichervorrichtung, auslesbar durch einen Computer, die tangibel ein Programm von Anweisungen verkörpert, die durch den Computer ausgeführt werden können, um ein Verfahren der Ermittlung eines Signals durchzuführen, das von einem Ziel reflektiert wird, das durch einen Pulslaserfleck markiert wird, wobei das Verfahren umfasst:

Empfangen von Information, die eine Vielzahl M an Abtastungen anzeigt, die von jedem Intervall der Vielzahl an Pulswiederholungsintervallen, PRI; des empfangenen Signals abgetastet wurden, das von einem Ziel reflektiert wird, das durch einen Pulslaserfleck markiert wird, wobei das Signal tatsächliche, von dem Ziel reflektierte Signalbereiche und Rauschen umfasst; wobei das Verfahren umfasst:

Zuweisung eines entsprechenden Index i einer jeden Abtastung oder jeder Kombination davon in einem abgetasteten PRI, wobei die Kombination die Summierung einer Vielzahl aufeinanderfolgender Abtastungen umfasst;
Zuweisung mindestens eines ersten Wertes oder eines zweiten Wertes einer jeden Abtastung der Vielzahl an Abtastungen oder jeder Kombination davon, basierend auf einem Vergleich des entsprechenden Intensitätswertes jeder Abtastung oder jeder Kombination davon mit einem vorgegebenen Schwellenwert;
Durchführung einer Summierung von entsprechenden i-ten indizierten, zugewiesenen Werten einer Vielzahl K von PRIs, und Erhalten entsprechender indizierter summierter Werte;
Identifizieren eines oder mehrerer Kandidatencluster unter den indizierten summierten Werten;
Auswählen eines endgültigen Kandidatenclusters unter einem oder mehreren Kandidatenclustern; wobei der endgültige Kandidatencluster einen Bereich von Indizes in dem Summierungsvektor repräsentiert, der den tatsächlichen Signalbereichen unter der Vielzahl an Abtastungen entspricht;
Lokalisieren des endgültigen Kandidatenclusters mit entsprechenden Abtastungen eines eingehenden PRI, wodurch eine Fläche in dem Signal ermittelt wird, die die tatsächlichen Signalbereiche umfasst.

**Revendications**

1. Procédé de détection d'un signal réfléchi par une cible (3) désignée par un spot laser à impulsions, le procédé comprenant les étapes consistant à :

recevoir un signal comprenant de vraies parties de signal réfléchies par ladite cible et du bruit ;

le procédé comprenant en outre les étapes consistant à :

échantillonner, pour chaque intervalle d'une pluralité d'intervalles de répétition d'impulsion, PRI, dudit signal reçu, une pluralité M d'échantillons ; chaque échantillon ayant une valeur d'intensité respective ; chaque échantillon ou chaque combinaison d'échantillons, où la combinaison comprend une somme d'une pluralité d'échantillons consécutifs, d'un PRI échantillonné étant assigné à un indice respectif ;

assigner à chaque échantillon de ladite pluralité d'échantillons ou à chacune desdites combinaisons d'échantillons au moins une première valeur ou une seconde valeur fondée sur une comparaison de la valeur d'intensité respective de chaque échantillon ou de chaque combinaison d'échantillons avec une valeur seuil donnée ;

additionner les $i^{ème}$ valeurs indexées assignées respectives d'une pluralité K de PRI et obtenir des valeurs indexées additionnées respectives ; identifier un ou plusieurs groupes candidats parmi lesdites valeurs indexées additionnées ; sélectionner un groupe candidat final parmi lesdits un ou plusieurs groupes candidats ; ledit groupe candidat final représentant une gamme d'indices qui correspondent aux vraies parties de signal parmi la pluralité d'échantillons ;

localiser ledit groupe candidat final avec des échantillons respectifs d'un PRI arrivant ; et ainsi détecter une zone dans ledit signal qui comprend les vraies parties de signal.

2. Procédé selon la revendication 1, où ledit signal est reçu par un capteur laser à quatre cadrans (105), chaque cadran étant associé à un canal de traitement respectif, où ledit échantillonnage et ladite assignation sont effectués par chacun des quatre cadrans, le procédé comprenant en outre les étapes consistant à :

appliquer une fonction logique OU à chaque $i^{ème}$ valeur indexée assignée respective sur chacun desdits quatre canaux de traitement, et obtenir ainsi une valeur consolidée en provenance des quatre canaux de traitement et effectuer ladite addition avec ladite valeur consolidée.

3. Procédé selon l'une quelconque des revendications 1 à 2, ou ledit signal est reçu par le capteur laser à quatre cadrans (105), chaque cadran étant associé à un canal de traitement respectif, où ledit échantillonnage et ladite assignation sont effectués par chacun des quatre cadrans, le procédé comprenant en outre les étapes consistant à :

additionner les valeurs d'échantillons respectifs reçus dans au moins chaque paire de cadrans adjacents, et générer ainsi 4 canaux de traitement intermédiaire ;

appliquer ladite assignation auxdits quatre canaux de traitement intermédiaires ; et appliquer une opération logique OU à chaque $i^{ème}$ valeur indexée assignée respective sur chacun desdits quatre canaux de traitement et desdits quatre canaux de traitement intermédiaires, et obtenir ainsi une valeur consolidée en provenance des huit canaux de traitement.

4. Procédé selon l'une quelconque des revendications précédentes comprenant en outre les étapes consistant à :

additionner une pluralité d'échantillons sur chaque côté de ladite zone et générer une fenêtre de suivi ; et

identifier au moins un vrai échantillon final à l'intérieur de ladite fenêtre de suivi, ledit au moins un vrai échantillon final représentant l'énergie dudit spot laser réfléchi par ladite cible ;

où ladite identification comprend en outre les étapes consistant à :

déplacer une fenêtre glissante d'une taille prédéfinie le long d'échantillons dans ladite fenêtre de suivi ;

effectuer une addition des valeurs d'intensité des échantillons dans la fenêtre glissante dans chaque position de la fenêtre glissante ;

identifier une position de la fenêtre glissante dans laquelle un groupe respectif d'échantillons additionnés a une valeur d'intensité additionnée qui dépasse un seuil prédéfini ; et

sélectionner l'un des groupes d'échantillons additionnés en tant que vrais échantillons finaux.

5. Procédé selon l'une quelconque des revendications précédentes comprenant en outre les étapes consistant à :

additionner, avant ladite assignation, des groupes de $n$ échantillons consécutifs desdits M échantillons, et obtenir ainsi une combinaison d'échantillons représentée par $l$ valeurs additionnées.

6. Procédé selon l'une quelconque des revendications précédentes, où les valeurs additionnées sont représentées dans un vecteur somme et où ladite identification des un ou plusieurs groupes candidats inclut un processus de filtrage comprenant les étapes consistant à :

déplacer au moins un filtre le long de valeurs dans ledit vecteur somme, où un filtre est représenté par une fenêtre glissante d'une taille prédéfinie ;
pour chaque valeur dans ledit vecteur somme :

additionner les valeurs situées dans ledit au moins un filtre, et ainsi générer une valeur additionnée horizontale respective ;
sélectionner une ou plusieurs valeurs additionnées horizontales dont les valeurs correspondent à un critère prédéfini, en tant que groupe candidat.

7. Procédé selon l'une quelconque des revendications précédentes, où ledit signal est reçu par un capteur laser à quatre cadrans (105), chaque cadran étant associé à un canal de traitements respectif, ledit capteur laser étant fixé à une plate-forme d'interception, le procédé comprenant en outre les étapes consistant à :

additionner des valeurs dans quatre fenêtres de suivi desdits quatre canaux de traitement respectifs et générer un cinquième canal ;
identifier au moins un vrai échantillon final pour chaque canal de traitement en se fondant sur plusieurs canaux.

8. Procédé selon l'une quelconque des revendications précédentes comprenant en outre les étapes consistant à :

mettre en oeuvre un processus de protection comprenant les étapes consistant à :

identifier en continu une nouvelle fenêtre de suivi et un nouveau vrai échantillon final dans celle-ci, ledit vrai échantillon final représentant l'énergie dudit spot laser réfléchi par ladite cible ; et
si une divergence entre ledit nouveau vrai échantillon final et ledit vrai échantillon final est identifiée, remplacer ledit vrai échantillon final par ledit nouveau vrai échantillon final.

9. Procédé selon l'une quelconque des revendications précédentes, où une horloge associée à un désignateur laser désignant ledit spot laser à impulsions n'est pas synchronisée avec une horloge associée avec un capteur configuré pour recevoir ledit signal.

10. Chercheur laser (200) configuré pour détecter un signal réfléchi par une cible (3) désignée par un spot laser à impulsion, le chercheur comprenant :

un capteur (105) associé à au moins un canal de traitement ; ledit canal de traitement comprenant un échantillonneur (111), une horloge précise (405) et une unité de traitement (120) ;
le capteur (105) est configuré pour recevoir un signal comprenant des vraies parties de signal réfléchies par ladite cible et du bruit ;
où l'échantillonneur (111) et l'horloge précise associée (405) sont configurés pour échantillonner pour chaque intervalle d'une pluralité d'intervalles de répétition d'impulsion, PRI, dudit signal reçu, une pluralité M d'échantillons ;
l'unité de traitement (120) et configurée pour réaliser au moins les opérations suivantes :

assigner à chaque échantillon ou combinaison d'échantillons dans un PRI échantilloné, où la combinaison comprend une somme d'une pluralité d'échantillons consécutifs, un indice i respectif ;
assigner à chaque échantillon de ladite pluralité d'échantillons ou à chacune desdites combinaisons d'échantillons au moins une première valeur ou une seconde valeur fondée sur une comparaison de la valeur d'intensité respective de chaque échantillon ou de chaque combinaison d'échantillons avec une valeur seuil donnée ;
additionner les $i^{\text{ème}}$ valeurs indexées assignées respectives d'une pluralité K de PRI et obtenir des valeurs indexées additionnées respectives ; identifier un ou plusieurs groupes candidats parmi lesdites valeurs indexées additionnées ; sélectionner un groupe candidat final parmi lesdits un ou plusieurs groupes candidats ; ledit groupe candidat final représentant une gamme d'indices qui correspondent aux vraies parties de signal parmi la pluralité d'échantillons ; localiser ledit groupe candidat final avec des échantillons respectifs d'un PRI arrivant, et ainsi détecter une zone dans ledit signal qui comprend les vraies parties de signal.

11. Chercheur laser selon la revendication 10, où ledit capteur (104) est un capteur laser à quatre cadrans, chaque cadran étant associé à un canal de traitement respectif, chaque canal de traitement comprenant un échantillonneur (111) configuré pour échantillonner un signal reçu par un cadran respectif, ladite assignation étant effectuée pour chacun desdits quatre canaux de traitement, ladite unité de traitement (120) étant en outre configurée pour appliquer une opération logique OU à chaque $i^{ème}$ valeur indexée assignée respective dans chacun desdits quatre canaux de traitement et obtenir ainsi une valeur consolidée en provenance des quatre canaux de traitement et additionner lesdits valeurs consolidées.

**12.** Chercheur laser selon l'une quelconque des revendications 10 à 11, où ledit capteur (105) est un capteur laser à quatre cadrans, chaque cadran étant associé à un canal de traitement respectif, chaque canal de traitement comprenant un échantillonneur (111) configuré pour échantillonner un signal reçu par un cadran respectif, ladite assignation étant effectuée pour chacun desdits quatre canaux de traitement, ladite unité de traitement (120) étant en outre configurée pour :

combiner des valeurs d'échantillons respectifs reçus au niveau de chaque paire de cadrans adjacents, et générer ainsi quatre canaux de traitement intermédiaire ; appliquer ladite assignation au quatre canaux de traitement intermédiaires ; et appliquer une opération logique OU à chaque $i^{ème}$ valeur indexée assignée respective dans chacun desdits quatre canaux de traitement et desdits quatre canaux de traitement intermédiaires et obtenir ainsi une valeur consolidée en provenance des huit canaux de traitement.

**13.** Chercheur laser selon l'une quelconque des revendications 10 à 12, où ladite unité de traitement (120) est en outre configurée pour additionner une pluralité d'échantillons sur chaque côté de ladite zone et générer une fenêtre de suivi ; identifier un vrai échantillon final dans ladite fenêtre de suivi, ledit vrai échantillon final représentant l'énergie dudit spot laser réfléchi par ladite cible ;
et où, afin d'accomplir ladite identification, ladite unité de traitement (120) est en outre configurée pour :
déplacer une fenêtre glissante d'une taille prédéfinie le long d'échantillons dans ladite fenêtre de suivi ; effectuer une addition des valeurs d'intensité des échantillons dans la fenêtre glissante dans chaque position de la fenêtre glissante ; identifier une position de la fenêtre glissante dans laquelle un groupe respectif d'échantillons additionnés a une valeur d'intensité additionnée qui dépasse un seuil prédéfini ; et sélectionner l'un des groupes d'échantillons additionnés en tant que vrais échantillons finaux.

**14.** Chercheur laser selon l'une quelconque des revendications 10 à 13, où ledit signal est reçu par un capteur laser à quatre cadrans (105), chaque cadran étant associé à un canal de traitement respectif, ledit capteur laser étant fixé à une plate-forme d'interception, ladite unité de traitement (120) étant configurée pour :

identifier un échantillon vrai final pour chaque canal de traitement ; et trouver la direction de ladite cible en se fondant sur une comparaison entre l'intensité du vrai échantillon final dans les différents canaux.

**15.** Chercheur laser selon l'une quelconque des revendications 10 à 14, où les valeurs additionnées sont représentées par un vecteur somme et où ladite unité de traitement (120) est en outre configurée pour réaliser, dans le cadre de ladite identification d'un ou plusieurs groupes candidats, un processus de filtrage pendant lequel l'unité de traitement est configurée pour déplacer au moins un filtre le long de valeurs dans ledit vecteur sommes, où un filtre est représenté par une fenêtre glissante d'une taille prédéfinie ;
pour chaque valeur dans ledit vecteur somme :

pour additionner des valeurs situées dans ledit au moins un filtre, et ainsi générer une valeur additionnée horizontale respective ; et pour sélectionner, parmi toutes les valeurs additionnées horizontales, un nombre prédéfini de valeurs additionnées horizontales, ayant des valeurs correspondantes à un critère prédéfini, en tant que groupe candidat.

**16.** Chercheur laser selon l'une quelconque des revendications 10 à 15, où ladite unité de traitement (120) est en outre configurée pour additionner des valeurs dans quatre fenêtres de suivi de quatre canaux de traitement respectifs et générer un cinquième canal ; et pour identifier au moins un vrai échantillon final pour chaque canal de traitement en se fondant sur plusieurs canaux.

**17.** Chercheur laser selon l'une quelconque des revendications 10 à 16, où ladite unité de traitement (120) est en outre configurée pour mettre en oeuvre un processus de protection pendant lequel l'unité de traitement est configurée pour identifier en continu une nouvelle fenêtre de suivi et un nouveau vrai échantillon final dans celle-ci, ledit vrai échantillon final représentant l'énergie dudit spot laser réfléchi par ladite cible ; et si une divergence entre ledit nouveau vrai échantillon final et ledit vrai échantillon final est identifiée, remplacer ledit vrai échantillon final par ledit nouveau vrai échantillon final.

**18.** Chercheur laser selon l'une quelconque des revendications 10 à 17, où une horloge associée avec un désignateur laser désignant ledit spot d'impulsion laser n'est pas synchronisée avec ladite horloge (405).

**19.** Chercheur laser selon l'une quelconque des revendications 10 à 17 intégré dans un système laser, le système laser comprenant en outre un désignateur laser configuré pour désigner ledit spot laser à impulsions.

**20.** Dispositif de stockage de programme lisible par un ordinateur, matérialisant de manière tangible un programme d'instructions exécutables par l'ordinateur afin de mettre en oeuvre un procédé pour détecter un signal réfléchi par une cible désignée par un spot laser à impulsions, le procédé comprenant les étapes consistant à :

recevoir des informations concernant une pluralité M d'échantillons prélevés à chaque intervalle d'une pluralité d'intervalles de répétition d'impulsion, PRI, dudit signal reçu réfléchi par une cible désignée par un spot laser à impulsions, le signal comprenant des vraies parties de signal réfléchies par ladite cible, et du bruit ; où le procédé comprend les étapes consistant à :

assigner à chaque échantillon ou chaque combinaison d'échantillons, où la combinaison comprend une somme d'une pluralité d'échantillons consécutifs dans un PRI échantillonné, un index respectif i ; assigner à chaque échantillon de ladite pluralité d'échantillons ou à chacune desdites combinaisons d'échantillons au moins une première valeur ou une seconde valeur fondée sur une comparaison de la valeur d'intensité respective de chaque échantillon ou de chaque combinaison d'échantillons avec une valeur seuil donnée ; additionner les $i^{\text{ème}}$ valeurs indexées assignées respectives d'une pluralité K de PRI et obtenir des valeurs indexées additionnées respectives ; identifier un ou plusieurs groupes candidats parmi lesdites valeurs indexées additionnées ; sélectionner un groupe candidat final parmi lesdits un ou plusieurs groupes candidats ; ledit groupe candidat final représentant une gamme d'indices dans ledit vecteur somme qui correspond aux vraies parties de signal parmi la pluralité d'échantillons ; localiser ledit groupe candidat final avec des échantillons respectifs d'un PRI arrivant ; et ainsi détecter une zone dans ledit signal qui comprend les vraies parties de signal.

Fig. 1

Fig. 2

Receiving energy reflected from a target together with noise (301)

For each PRI:

sampling a plurality of samples (303)

assigning a value, based on a predefined criterion, for each sample of said plurality of samples or a combination thereof (305)

Performing summation of respective assigned values of K pulse rate intervals, thereby generating a summation vector (307)

identifying one or more candidate clusters within the summation vector (309)

selecting a final candidate cluster from among said one or more candidate clusters (313)

Locating the final candidate cluster in the raw data and generating a respective tracking window (315)

Identifying at least one final true sample in the tracking window (317)

Tracking target based on distribution of signal intensity in at least the 4 channels (319)

Fig. 3

Fig. 4

Receiving energy reflected from a target together with noise (501)

For each PRI:

For each processing channel

Sampling M samples (503)

Performing horizontal summation of $n$ samples and obtaining I summed values (504)

Assigning each summed value with a respective value based on a predefined criterion (505)

Generating 4 intermediate channels and assigning values (506)

Performing logical OR on values of the 8 channels (507)

(509)

Is PRI index j < K — No — Is PRI index j = K — No — Is PRI index j > K

Yes

Yes

Yes

Deleting earliest row (e.g. $k=0$) from matrix (511)

Inserting a value assigned to each summed value in a respective cell i at row j of the matrix (513)

Inserting a value assigned to each summed value in a respective cell i at row K of the matrix (515)

Performing vertical summation of each cell $i$ in K rows in vertical summation vector (517)

Filtering vertical summation vector (519)

Shrinking candidate clusters (521)

Mapping candidate clusters within candidate mapping-table (523)

Selecting a final candidate cluster (525)

Fig. 5

EP 2 870 492 B1

601

| | | | | | | | | | | | | | | | | | | | | | | | | | |
|---|---|---|---|---|---|---|---|---|---|---|---|---|---|---|---|---|---|---|---|---|---|---|---|---|---|
| K | | | | | 1 | | | | | 1 | | | | | 1 | | | | | 1 | | | | | |
| K-1 | | | 1 | | | | 1 | | | 1 | | | | 1 | | | | | 1 | | | | | | |
| K-2 | 1 | | | | | | | | 1 | 1 | | | | | | | 1 | | | | | | | | |
| ⋮ | | | | | 1 | | | | 1 | | | | | | | | | | | | | | 1 | | |
| 6 | | | | | | | | 1 | | | | | 1 | | | | 1 | | | | | | | | |
| 5 | | | 1 | | | | | 1 | | | | | | | | | | | | | | | 1 | | |
| 4 | | | 1 | | | | 1 | | | | | | | | | 1 | | | | | | | | | |
| 3 | 1 | | | | | | 1 | | | | | | | | | 1 | | | | | | | | | |
| 2 | | 1 | | | | 1 | | | | | | | | | | | | | | 1 | | | | | |
| 1 | | | | | | 1 | | | | | | | | | | | | | | 1 | | | | | |

Fig 6a

| 0 | 2 | 1 | 3 | 0 | 2 | 0 | 3 | 2 | 2 | 2 | 3 | 0 | 0 | 1 | 1 | 3 | 1 | 0 | 3 | 2 | 0 | 2 | 0 | 0 |
|---|---|---|---|---|---|---|---|---|---|---|---|---|---|---|---|---|---|---|---|---|---|---|---|---|

605

603

Fig 6b

| 0 | 2 | 1 | 3 | 0 | 2 | 0 | 3 | 2 | 2 | 2 | 3 | 0 | 0 | 1 | 1 | 3 | 1 | 0 | 3 | 2 | 0 | 2 | 0 | 0 |

Fig. 6c

Shifting one or more filters, cell by cell, across the
vertical summation vector (block 701)

For each filter, performing, for each cell i, horizontal
summation of the values in the cells which are
situated within a filter  (703)

Selecting one or more candidate clusters (705)

Fig. 7

Aligning the respective location of final candidate cluster with a respective location of samples in the raw data (803)

Adding a plurality of samples on each side of the samples in the raw data and generating tracking window (805)

For each PRI:

Summing values in 4 channels and generating a fifth channel (807)

Performing non-coherent integration of L cycles (PRIs) (809)

Performing horizontal summation with a sliding window of X samples (811)

Determining which group of summed samples have a summed intensity value that exceeds a predefined threshold and selecting a group of final true samples(813)

Guiding missile according to distribution of energy across the four channels (815)

Executing guard verification (817)

Fig. 8

Executing detection process and identifying a new tracking window (block 901)

↓

Comparing new tracking window with current tracking window (903)

↓

Is new and current tracking window different?

No

Yes

Continue tracking with current tracking window (907)

Replace current tracking window with new tracking window (909)

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6043867 A

- US 8054451 B